(19) 

**Europäisches Patentamt**
**European Patent Office**
**Office européen des brevets**

(11)  **EP 4 429 354 A1**

(12)  # EUROPEAN PATENT APPLICATION
published in accordance with Art. 153(4) EPC

(43) Date of publication:
**11.09.2024  Bulletin 2024/37**

(21) Application number: **21962968.0**

(22) Date of filing: **05.11.2021**

(51) International Patent Classification (IPC):
*H04W 72/04* (2023.01)   *H04W 52/02* (2009.01)
*H04L 5/00* (2006.01)

(52) Cooperative Patent Classification (CPC):
**H04W 72/04; H04L 5/00; H04W 52/02**

(86) International application number:
**PCT/CN2021/129096**

(87) International publication number:
**WO 2023/077455 (11.05.2023 Gazette 2023/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **WU, Zuomin
Dongguan, Guangdong 523860 (CN)**

(74) Representative: **Taor, Simon Edward William et al
Venner Shipley LLP
200 Aldersgate
London EC1A 4HD (GB)**

(54)  **WIRELESS COMMUNICATION METHOD, TERMINAL DEVICE, AND NETWORK DEVICE**

(57)  Provided in the embodiments of the present application are a wireless communication method, a terminal device, and a network device. The method comprises: a terminal device determining a first time-domain length, and/or a second time-domain length, wherein the first time-domain length corresponds to the maximum time-domain length of a first search space set group on a target time-domain length, and the second time-domain length corresponds to the maximum time-domain length of a second search space set group on a target time-domain length. Therefore, in a communication system, a search space set of a terminal device is divided into a first search space group and a second search space set group, and different search space set groups are further configured to correspond to different time-domain length configurations, thereby facilitating lowering of the requirement for the ability of the terminal device to monitor PDCCH candidates.

200

A terminal device determines a first time domain duration and/or a second time domain duration, the first time domain duration corresponds to a maximum time domain duration of a first search space set group on a target time domain duration, and the second time domain duration corresponds to a maximum time domain duration of a second search space set group on the target time domain duration

S210

**FIG. 2**

EP 4 429 354 A1

**Description**

TECHNICAL FIELD

The present disclosure relates to the field of communications, and more particularly to a method for wireless communication, a terminal device and a network device.

BACKGROUND

In a New Radio (NR) system, by being configured with different search space sets at different times, a terminal device can monitor, at corresponding Physical Downlink Control Channel (PDCCH) monitoring occasions, PDCCH) candidates according to a search space set associated with a control channel resource set of a PDCCH.

With the evolution of the NR system, new frequency bands are introduced, such as 52.6 GHz ~ 71 GHz or 71GHz ~ 114.25 GHz. The new frequency bands may include a licensed spectrum or an unlicensed spectrum. In other words, the new frequency bands include both the dedicated spectrum and the shared spectrum. The subcarrier spacing (SCS) of the new frequency bands is large, for example, the subcarrier spacing may be 480 kHz or 960 kHz. Because of the large subcarrier spacing, the time length occupied by each slot is short. In such a case, how to configure the search space sets to monitor the PDCCH candidates is an urgent problem to be solved.

SUMMARY

Embodiments of the present disclosure provide a method for wireless communication, a terminal device and a network device. In a communication system, search space sets of the terminal device are divided into a first search space set group and a second search space set group, and different search space set groups are further configured to correspond to different time domain duration configurations. It is thus beneficial to reducing the requirement on the capability of the terminal device to monitor PDCCH candidates.

In a first aspect, a method for wireless communication is provided, the method includes: a terminal device determines a first time domain duration and/or a second time domain duration, the first time domain duration corresponds to a maximum time domain duration of a first search space set group on a target time domain duration, and the second time domain duration corresponds to a maximum time domain duration of a second search space set group on the target time domain duration.

In a second aspect, a method for wireless communication is provided, the method includes: a network device determines a first time domain duration and/or a second time domain duration, the first time domain duration corresponds to a maximum time domain duration of a first search space set group on a target time domain duration, and the second time domain duration corresponds to a maximum time domain duration of a second search space set group on the target time domain duration.

In a third aspect, a terminal device is provided for performing the method in the first aspect.

Specifically, the terminal device includes a functional module for performing the method in the first aspect.

In a fourth aspect, a network device is provided for performing the method in the second aspect.

Specifically, the network device includes a functional module for performing the method in the second aspect.

In a fifth aspect, a terminal device is provided, and the terminal device includes a processor and a memory. The memory is used for storing a computer program, and the processor is configured to invoke and run the computer program stored in the memory to perform the method in the first aspect.

In a sixth aspect, a network device is provided, and the network device includes a processor and a memory. The memory is used for storing a computer program, and the processor is configured to invoke and run the computer program stored in the memory to perform the method in the second aspect.

In a seventh aspect, an apparatus is provided for implementing the method in any one of the first aspect and the second aspect.

Specifically, the apparatus includes a processor configured to invoke and run a computer program from a memory, to cause a device on which the chip is installed to perform the method as in any of the first to second aspects described above.

In an eighth aspect, a computer-readable storage medium is provided for storing a computer program that causes a computer to perform the method in any one of the first aspect and the second aspect.

In a ninth aspect, a computer program product is provided, the computer program product includes computer program instructions, and the computer program instructions cause a computer to perform the method in any one of the first aspect and the second aspect.

In a tenth aspect, a computer program is provided, when running on a computer, the computer program causes the computer to perform the method in any one of the first aspect and the second aspect.

According to the above technical solution, In a communication system, search space sets of the terminal device are divided into a first search space set group and a second search space set group, and different search space set groups are further configured to correspond to different time domain duration configurations. It is thus beneficial to reducing the requirement on the capability of the terminal device to monitor PDCCH candidates.

BRIEF DESCRIPTION OF THE DRAWINGS

FIG. 1A-FIG. 1C are schematic diagrams of application scenarios provided by embodiments of the present disclosure.
FIG. 2 is a schematic flowchart of a method for wireless communication provided according to an embodiment of the present disclosure.
FIG. 3 is a schematic diagram of determining target positions of a second time domain duration provided by an embodiment of the present disclosure.
FIG. 4 is a schematic diagram of determining target positions of a first time domain duration provided by an embodiment of the present disclosure.
FIG. 5 is a schematic diagram of determining target positions of a first time domain duration provided by an embodiment of the present disclosure.
FIG. 6 is a schematic diagram of updating target positions of a second time domain duration provided by an embodiment of the present disclosure.
FIG. 7 is a schematic diagram of updating target positions of a first time domain duration provided by an embodiment of the present disclosure.
FIG. 8 is a schematic diagram of updating target positions of a first time domain duration provided by an embodiment of the present disclosure.
FIG. 9 is a schematic diagram of updating target positions of a first time domain duration provided by an embodiment of the present disclosure.
FIG. 10 is a schematic flowchart of another method for wireless communication provided according to an embodiment of the present disclosure.
FIG. 11 is a schematic block diagram of a terminal device provided according to an embodiment of the present disclosure.
FIG. 12 is a schematic block diagram of a network device provided according to an embodiment of the present disclosure.
FIG. 13 is a schematic block diagram of a communication device provided according to an embodiment of the present disclosure.
FIG. 14 is a schematic block diagram of an apparatus provided according to an embodiment of the present disclosure.
FIG. 15 is a schematic block diagram of a communication system provided according to an embodiment of the present disclosure.

DETAILED DESCRIPTION

The technical solution in embodiments of the present disclosure will be described below in combination with the drawings in the embodiments of the present disclosure. It will be obvious that the described embodiments are part of the embodiments of the present disclosure, rather than all of the embodiments. With respect to the embodiments in the present disclosure, all other embodiments obtained by those of ordinary skill in the art without making creative efforts fall within the scope of protection of the present disclosure.

The technical solution in embodiments of the present disclosure can be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, an LTE-based access to unlicensed spectrum (LTE-U) system, a NR-based access to unlicensed spectrum (NR-U) system, a Non-Terrestrial Network (NTN) system, a Universal Mobile Telecommunications System (UMTS), a Wireless Local Area Network (WLAN), an internet of things (IoT), a Wireless Fidelity (WiFi), a 5th Generation (5G) system or other communication systems.

In general, traditional communication systems support a limited number of connections and are easy to implement. However, with the development of the communication technologies, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) etc. The embodiments of the present disclosure can also be applied to these communication systems.

In some embodiments, the communication systems in the embodiments of the present disclosure may be applied to Carrier Aggregation (CA) scenarios, Dual Connectivity (DC) scenarios, or Standalone (SA) network deployment scenarios.

In some embodiments, the communication system in the embodiments of the present disclosure can be applied to an unlicensed spectrum, which can also be considered as a shared spectrum. Alternatively, the communication system in the embodiments of the present disclosure can also be applied to a licensed spectrum, which can also be considered as a non-shared spectrum.

In some embodiments, the communication system in the embodiments of the present disclosure can be applied to Frequency Range 1 (FR1) (corresponding to a frequency band range of 410 MHz to 7.125 GHz), to the FR2 (corresponding to a frequency band range of 24.25 GHz to 52.6 GHz), and to new frequency bands, such as high frequency bands corresponding to a frequency band range of 52.6 GHz to 71 GHz or a frequency band range of 71GHz to 114.25 GHz.

In some embodiments, the embodiments of the present disclosure can be applied to a Non-Terrestrial Network (NTN) system or to a Terrestrial Network (TN) system.

Each embodiment is described in connection with a network device and a terminal device in the embodiments of the present disclosure. The terminal device may also be referred to as a User Equipment (UE), an access terminal, a user unit, a user station, a mobile station, a remote station, a remote terminal, a mobile device, a user terminal, a terminal, a wireless communication device, a user agent or a user apparatus, etc.

The terminal device may be a station (ST) in the WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing devices connected to a wireless modem, an on-board equipment, a wearable device, a next generation communication system, such as a terminal device in an NR network, or a terminal device in a future evolved Public Land Mobile Network (PLMN), etc.

In the embodiments of the present disclosure, the terminal device may be arranged on land including indoor or outdoor areas, handheld, wearable or on-board. The terminal device may also be arranged on the water (such as on a ship). The terminal device may further be arranged on the air (such as on an airplane, a balloon, or a satellite).

In the embodiments of the present disclosure, the terminal device may be a mobile phone, a tablet computer (or Pad), a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal equipment in a smart home, etc. The terminal device involved in the embodiments of the present disclosure may also be referred to as a terminal, a user equipment (UE), an access terminal device, an on-board terminal, an industrial controlled terminal, a UE unit, a UE station, a mobile station, a remote station, a remote terminal device, a mobile device, a UE terminal device, a wireless communication device, a UE agent or a UE apparatus, etc. The terminal device may also be fixed or mobile.

As an example rather than a limitation, in the embodiments of the present disclosure, the terminal device may also be a wearable device. The wearable device may also be referred to as a wearable intelligent device, which is a general name of the wearable devices developed by intelligently designing for the daily wears with a wearable technology, such as glasses, gloves, watches, clothing and shoes. The wearable device is a portable device that is worn directly on the body or integrated into the user's clothes or accessories. The wearable device is not only a hardware device, but also a device realizing powerful functions through software support, data interaction and cloud interaction. Generalized wearable intelligent devices include: a device (such as intelligent watches or intelligent glasses) with full functions and large size, which can implement complete or partial functions without relying on an intelligent phone, and a device (such as various intelligent bracelets and intelligent jewelries for monitoring physical signs) which only focuses on a certain application function, and is used in conjunction with other devices (such as smart phone).

In the embodiments of the present disclosure, the network device may be a device for communicating with a mobile device, and the network device may be an Access Point (AP) in the WLAN, a Base Transceiver Station (BTS) in the GSM or CDMA, a NodeB (NB) in the WCDMA, an Evolutional Node B (eNB or eNodeB) in the LTE, a relay station or an AP, an on-board equipment or a wearable device, a gNB in an NR network, a network device in a future evolved PLMN network or a network device in a NTN.

As an example rather than a limitation, in the embodiments of the present disclosure, the network device may have mobility, for example, the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, or the like. Optionally, the network device may also be a base station arranged on land, on the water and the like.

In the embodiments of the present disclosure, the network device may provide services for a cell, and the terminal device communicates with the network device through the transmission resources (such as frequency domain resources, also called spectrum resources) used by the cell. The cell may be a cell corresponding to the network device (e.g., the base station), and the cell may belong to a macro base station or a base station corresponding to a small cell. The small cell may include a metro cell, a micro cell, a pico cell, a femto cell, etc. These small cells have characteristics of small coverage and low transmission power, which are suitable for providing services of high-speed data transmission.

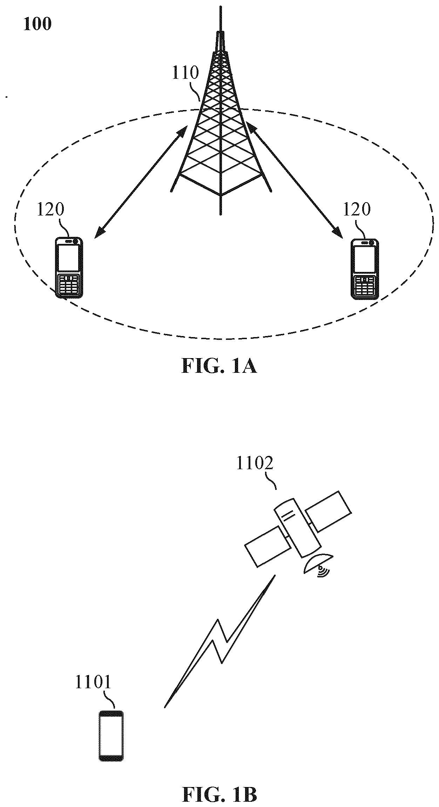

As an example, FIG. 1A is an architectural schematic diagram of a communication system provided by an embodiment of the present disclosure. As shown in FIG. 1A, the communication system 100 may include a network device 110, the network device 110 may be a device that communicates with a terminal device 120 (or referred to as a communication terminal or a terminal). The network device 110 may provide communication coverage for a particular geographic area and may communicate with terminal devices located within the coverage area.

FIG. 1A exemplarily illustrates one network device and two terminal devices. Optionally, the communication system 100 may include a plurality of access network devices, and other numbers of terminal devices may be included within the coverage area of each network device, which is not limited in embodiments of the present disclosure.

As an example, FIG. 1B is an architectural schematic diagram of another communication system provided by an embodiment of the present disclosure. Referring to FIG. 1B, the communication system includes a terminal device 1101 and a satellite 1102, and wireless communication may be performed between the terminal device 1101 and the satellite 1102. The network formed between the terminal device 1101 and the satellite 1102 may also be referred to as an NTN. In the architecture of the communication system shown in FIG. 1B, the satellite 1102 may have functions of a base station and direct communication may be performed between the terminal device 1101 and the satellite 1102. Under the system architecture, the satellite 1102 may be referred to as a network device. Optionally, a plurality of network devices 1102 may be included in the communication system and other numbers of terminal devices may be included within the coverage area of each network device 1102, which is not limited in embodiments of the present disclosure.

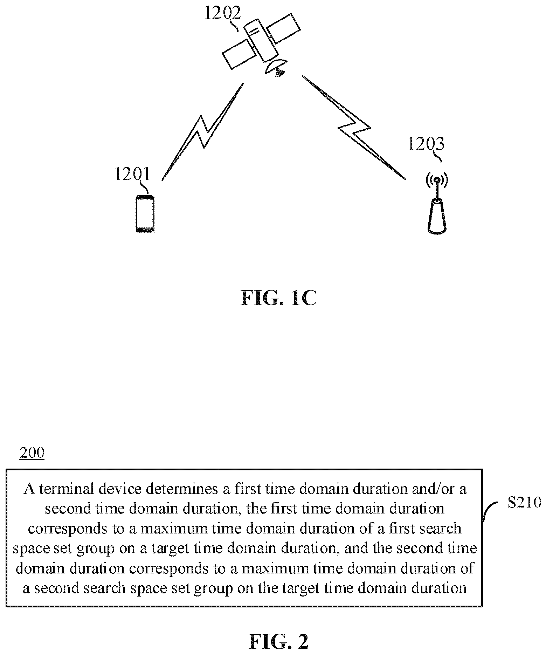

As an example, FIG. 1C is an architectural schematic diagram of another communication system provided by an embodiment of the present disclosure. Referring to FIG. 1C, the communication system includes a terminal device 1101, a satellite 1102 and a base station 1203, wireless communication may be performed between the terminal device 1101 and the satellite 1102 and a communication may be performed between the satellite 1102 and the base station 1203. The network formed among the terminal device 1101, the satellite 1102 and the base station 1203 may also be referred to as an NTN. In the architecture of the communication system shown in FIG. 1C, the satellite 1102 may not have functions of a base station and communication between the terminal device 1201 and the base station 1203 requires a transit through the satellite 1202. Under the system architecture, the base station 1203 may be referred to as a network device. Optionally, a plurality of network devices 1102 may be included in the communication system and other numbers of terminal devices may be included within the coverage area of each network device 1102, which is not limited in embodiments of the present disclosure.

It is to be noted that FIG. 1A-FIG. 1C merely illustrate the system to which the present disclosure applies, and of course, the method shown in the embodiments of the present disclosure may also be applied to other systems, such as a 5G communication system, an LTE communication system, etc., which is not limited in embodiments of the present disclosure.

Optionally, the wireless communication system shown in FIG. 1A-FIG. 1C may also include other network entities, such as a Mobility Management Entity (MME), an Access and Mobility Management Function (AMF), etc., which is not limited in embodiments of the present disclosure.

It is to be noted that a device having a communication function in the network/system in the embodiments of the present disclosure may be referred to as a communication device. The communication system 100 shown in FIG. 1A is taken as an example, the communication device may include the network device 110 and the terminal device 120 having communication functions, the network device 110 and the terminal device 120 may be specific devices described above and will not be elaborated herein. The communication device may further include other devices in the communication system 100, such as a network controller, a mobility management entity and other network entities, which is not limited in embodiments of the present disclosure.

It is to be noted that terms "system" and "network" in the present disclosure may usually be exchanged. In the present disclosure, the term "and/or" is only used for describing an association relationship of associated objects, for example, the term "and/or" represents that three relationships may exist between previous and next associated objects. For example, A and/or B may represent three conditions: independent existence of A, existence of both A and B, and independent existence of B. Character "/" in the present disclosure usually represents that an "or" relationship is formed between the previous and next associated objects.

It is to be noted that the "indication" mentioned in the embodiments of the present disclosure may be a direct indication, may be an indirect indication, or may represent an association relationship. For example, A indicating B may represent that A directly indicates B, e.g., B can be obtained through A, may also represent that A indirectly indicates B, e.g., A indicates C, and B can be obtained through C, or may also represent that there is an association relationship between A and B.

In the embodiments of the present disclosure, the "configuration" may include that it is accomplished by the network device by way of transmitting indication information to the terminal device.

In the description of the embodiments of the disclosure, the term "corresponding to" may represent that there is a direct correspondence or an indirect correspondence relationship between two elements, may also represent that there is an association relationship between the two elements, or may also be a relationship of indicating and being indicated, or configuration and being configured, etc.

In the embodiments of the present disclosure, the "predefined" or "preconfigured" may be implemented by pre-storing corresponding codes, tables or other means that may be used to indicate relevant information in devices (e.g., including terminal devices and network devices), specific implementations of which are not limited herein. For example, the "predefined" may refer to what is defined in "protocol".

In the embodiments of the present disclosure, the "protocol" may refer to standard protocols in the communication field, and may include, for example, an LTE protocol, an NR protocol and related protocols applied in future communication systems, which are not limited in the present disclosure.

In order to facilitate understanding of the technical solutions of the embodiments of the present disclosure, the technical solutions of the present disclosure will be described in detail below through specific embodiments. The following related technologies may be arbitrarily combined with the technical solutions of the embodiments of the present disclosure as optional solutions, all of which belong to the scope of protection of the embodiments of the present disclosure. The embodiments of the present disclosure include at least part of the following contents.

With the evolution of NR systems, a study of the NR systems may include new frequency bands, such as 52.6 GHz-71 GHz or 71GHz~114.25 GHz. The new frequency bands may include a licensed spectrum or an unlicensed spectrum. In other words, the new frequency bands include both the dedicated spectrum and the shared spectrum. The subcarrier spacing considered in the new frequency bands may be larger than the subcarrier spacing supported by existing NR systems, for example, the subcarrier spacing may be 480 kHz or 960 kHz.

In order to make the embodiments of the present disclosure better understood, the TypeO-PDCCH Common Search Space (CSS) configuration corresponding to System Information Block 1 (SIB1) in an NR system related to the present disclosure is described.

In the NR system, a resource set used to transmit PDCCH is referred to as a Control-resource set (CORESET). One CORESET may include a number $N_{RB}$ of RBs in frequency domain and a number $N_{symb}$ of symbols in time domain. The $N_{RB}$ and the $N_{symb}$ are configured by a network device. One CORESET may be associated with one or more Search Space Sets (SSSs). One or more Control Channel Elements (CCEs) are included in one search space set, and a terminal device may monitor PDCCH candidates on the CCEs included in the search space set.

In an initial access stage, the terminal device has not established a Radio Resource Control (RRC) connection with the network device, and the terminal device is not configured with a user-specific control channel, but needs to receive common control information in the cell through the common control channel on an initial downlink Band Width Part (BWP), so as to complete a subsequent initial access procedure. For example, the PDCCH transmitted in TypeO-PDCCH CSS set is used for scheduling a Physical Downlink Shared Channel (PDSCH) carrying the SIB1, the search space set of the PDCCH is indicated by a PDCCH SIB1 configuration (pdcch-ConfigSIB 1) information field in Master Information Block (MIB) information, or configured by RRC signaling, such as the search space SIB1 (searchSpaceSIB1) or search space zero (searchSpaceZero) in the PDCCH common configuration (PDCCH-ConfigCommon), a Cyclic Redundancy Check (CRC) of a Downlink Control Information (DCI) format of the PDCCH is scrambled by a System Information Radio Network Temporary Identifier (SI-RNTI). The terminal device can monitor the PDCCH candidates according to a CORESET 0 associated with the TypeO-PDCCH CSS at corresponding TypeO-PDCCH CSS monitoring occasions, thereby receiving the scheduling of corresponding SIB1 messages.

Specifically, the pdcch-ConfigSIB1 information field includes 8 bits where 4 bits (e.g., lower 4 bits) indicate a configuration of the TypeO-PDCCH CSS and the other 4 bits (e.g., upper 4 bits) indicate a configuration of the CORESET 0.

The configuration of the CORESET 0 includes: a mode type of multiplexing a Synchronization Signal Block (SSB) and the CORESET 0, the number of Physical Resource Blocks (PRBs) occupied by the CORESET 0, the number of Orthogonal Frequency-Division Multiplexing (OFDM) symbols for the CORESET 0, and an offset (in a unit of resource block (RB)) between an SSB lower boundary and a CORESET 0 lower boundary in frequency domain.

The configuration of the TypeO-PDCCH CSS includes: values of parameters O and M (for Mode 1 only), an index of the first OFDM symbol in the search space, and the number of search spaces in each slot (for Mode 1 only).

For Mode 1, the SSB and the CORESET 0 may be mapped on different symbols, and the frequency range of the CORESET 0 needs to include the SSB. The TypeO-PDCCH CSS of one SSB is within a monitoring window containing two consecutive slots, and a cycle of the monitoring window is 20 ms.

In some embodiments, a mapping relationship between an index i of the SSB and a first slot of the corresponding monitoring window is shown in equation 1.

$$n_0 = \left( O \cdot 2^{\mu} + \lfloor i \cdot M \rfloor \right) \bmod N_{slot}^{frame,\mu} \qquad \text{equation 1}$$

$n_0$ is the index of the first slot of the TypeO-PDCCH CSS monitoring window within one radio frame, and one radio frame is 10 ms. When $\left\lfloor \left( O \cdot 2^{\mu} + \left\lfloor i \cdot M \right\rfloor \right) / N_{\text{slot}}^{\text{frame},\mu} \right\rfloor \bmod 2 = 0$, it is mapped to the first radio frame of 20 ms. When $\left\lfloor \left( O \cdot 2^{\mu} + \left\lfloor i \cdot M \right\rfloor \right) / N_{\text{slot}}^{\text{frame},\mu} \right\rfloor \bmod 2 = 1$, it is mapped to the second radio frame of 20 ms.

$\mu$ represents a subcarrier spacing (SCS) configuration, $N_{slot}^{frame,\mu}$ represents that the number of slots included in one radio frame when the SCS configuration is $\mu$. Table 1 shows corresponding SCS sizes under different SCS configurations, the number of slots ( $N_{slot}^{frame,\mu}$ ) included in one radio frame and the number of slots ( $N_{slot}^{subframe,\mu}$ ) included in one subframe.

Table 1

| $\mu$ | SCS | $N_{\text{slot}}^{\text{frame},\mu}$ | $N_{\text{slot}}^{\text{subframe},\mu}$ |
|---|---|---|---|
| 0 | 15 kHz | 10 | 1 |
| 1 | 30 kHz | 20 | 2 |
| 2 | 60 kHz | 40 | 4 |
| 3 | 120 kHz | 80 | 8 |
| 4 | 240 kHz | 160 | 16 |
| 5 | 480 kHz | 320 | 32 |
| 6 | 960 kHz | 640 | 64 |

The parameter M controls an overlap degree of monitoring windows corresponding to SSB i and SSB i+1, and the overlap degree includes three situations: completely no overlap (M=2), overlap with one slot (M=1) and completely overlap (M=1/2). The parameter O is used to control a start position of the monitoring window corresponding to the first SSB to avoid the conflict between the TypeO-PDCCH CSS monitoring window and the SSB. A value of O may be {0, 2, 5, 7} for the FR1 and the value of O may be {0, 2.5, 5, 7.5} for the FR2.

For example, when the SCS is 120 kHz, offsets corresponding to values 0, 2.5, 5 and 7.5 of O are 0 slot, 20 slots, 40 slots, and 60 slots, respectively.

It is to be noted that the SSB can also be referred to as a Synchronization Signal/Physical Broadcast CHannel block (SS/PBCH block).

In order to make the embodiments of the present disclosure better understood, the PDCCH monitoring occasions related to the present disclosure are described.

The terminal device monitors PDCCH candidates in defined PDCCH search space set(s). One search space set may be a CSS set or a UE-specific Search Space (USS) set. The search space set(s) monitored by the terminal device include one or more of the following search space sets.

TypeO-PDCCH CSS set: a PDCCH transmitted in the TypeO-PDCCH CSS set is used to schedule a PDSCH carrying SIB1, the search space set of the PDCCH is indicated by pdcch-ConfigSIB1 information field in the MIB information or configured by RRC signaling, such as searchSpaceSIB1 or searchSpaceZero in PDCCH-ConfigCommon, and a CRC in a DCI format of the PDCCH is scrambled by an SI-RNTI.

TypeOA-PDCCH CSS Set: a PDCCH transmitted in the TypeOA-PDCCH CSS Set is used to schedule a PDSCH carrying OtherSystemInformation, the search space set of the PDCCH is configured by RRC signaling, such as search space for other system information (searchSpaceOtherSystemInformation) in the PDCCH-ConfigCommon, and the CRC of the DCI format of the PDCCH is scrambled by the SI-RNTI.

Typel-PDCCH CSS Set: a PDCCH transmitted in the Typel-PDCCH CSS Set is used to schedule a PDSCH carrying a Random Access Response (RAR), the search space set of the PDCCH is configured by RRC signaling, such as search space for random access (ra-SearchSpace) in the PDCCH-ConfigCommon, and the CRC of the DCI format of the PDCCH is scrambled by a Random Access Radio Network Temporary Identifier (RA-RNTI), a MSGB Radio Network Temporary Identifier (MSGB-RNTI) or a Temporary Cell RNTI (TC-RNTI).

Type2-PDCCH CSS Set: a PDCCH transmitted in the Type2-PDCCH CSS Set is used to schedule a PDSCH carrying a paging message, the search space set of PDCCH is configured by RRC signaling, such as pagingSearchSpace in the PDCCH-ConfigCommon, and the CRC of the DCI format of the PDCCH is scrambled by a Paging RNTI (P-RNTI).

Type3-PDCCH CSS Set: a PDCCH transmitted in the Type3-PDCCH CSS Set is a Group common (GC) PDCCH, the search space set of PDCCH is configured by RRC signaling, such as a SearchSpace in PDCCH-Config, and a type of the search space set is configured as common, the CRC of the DCI format of the PDCCH is scrambled by an Interrupted Transmission Indication RNTI (INT-RNTI), a Slot Format Indication RNTI (SFI-RNTI), a Transmit Power Control Physical Uplink Shared Channel RNTI (TPC-PUSCH-RNTI), a Transmission Power Control Physical Uplink Control Channel RNTI (TPC-PUCCH-RNTI), a Transmission Power Control Sounding Reference Signal RNTI (TPC-SRS-RNTI) or a Cancellation indication RNTI (CI-RNTI). In addition, for a primary cell, the CRC of the DCI format may also be scrambled by a Cell Radio Network Temporary Identifier (C-RNTI), a Modulation and Coding Scheme Cell Radio Network Temporary Identifier (MCS-C-RNTI), a Configured Scheduling RNTI (CS-RNTI) or a Power Saving Radio Network Temporary Identifier (PS-RNTI).

USS set: a PDCCH transmitted in the USS set is a PDCCH dedicated to the terminal device, the search space set of PDCCH is configured by RRC signaling, such as the SearchSpace in the PDCCH-Config, and the type of the search space set is configured as ue-Specific, and the CRC of the DCI format of the PDCCH is scrambled by the C-RNTI, the MSC-C-RNTI, a Semi-Persistent Channel State Information RNTI (SP-CSI-RNTI), the CS-RNTI, a Sidelink RNTI (SL-RNTI), a Sidelink Configured Scheduling RNTI (SL-CS-RNTI) or a Sidelink Semi-Persistent Scheduling Vehicle-to-Everything RNTI (SL-SPS-V-RNTI).

By being configured with different search space sets at different times, a terminal device can monitor, at corresponding PDCCH monitoring occasions, PDCCH candidates according to a search space set associated with a control channel resource set of a PDCCH.

The terminal device may monitor the PDCCH candidates based on capabilities of the terminal device, and the capabilities of the terminal device include a maximum value of the number of the PDCCH candidates monitored on a serving cell and a maximum value of the number of non-overlapping CCEs.

For example, the definition of the capabilities of the terminal device includes two cases.

First case: the capabilities of the terminal device are defined based on each slot;
Second case: the capabilities of the terminal device are defined based on each span.

For the first case, each slot includes one PDCCH monitoring occasion for the terminal device, and a maximum number of symbols between a first symbol and a last symbol where the terminal device performs monitoring within the monitoring occasion is 3.

For the second case, each span corresponds to a span combination (X, Y), where X represents a minimum time interval between first symbols of two consecutive PDCCH monitoring occasions for the terminal device, and Y represents a maximum number of symbols between the first symbol and the last symbol where the terminal device performs monitoring during one PDCCH monitoring occasion. For example, (7, 3) represents that the minimum time interval between first symbols of two consecutive PDCCH monitoring occasions for the terminal device is 7 symbols, and that the terminal device needs to perform monitoring at at most 3 symbols in one PDCCH monitoring occasion.

In order to make the embodiments of the present disclosure better understood, the technical problem solved by the present disclosure is described.

In a high frequency system, a time length occupied by each slot is short due to the large subcarrier spacing. If the PDCCH monitoring manner mentioned above is adopted, the terminal device is required to estimate channels in CORESET and monitor PDCCH candidates in each slot, which has high requirement on the processing capability of the terminal device. In order to reduce the requirement on the processing capability of the terminal device, the capability of the terminal device is defined based on a slot group (a plurality of slots) in the high frequency system. In such a case, how to configure the search space set of the terminal device is a problem to be solved.

Based on the above problem, the present disclosure provides a solution for monitoring control channels, in the communication system, for example during an initial access procedure or in case of configuring an Automatic Neighbour Cell Relation (ANR) function, when the subcarrier spacing is 480 kHz or 960 kHz, a monitoring scheme of a PDCCH carrying SIB1 is optimized by configuring a configuration of the search space set suitable for the communication system. Further, in the communication system, when the subcarrier spacing is 480 kHz or 960 kHz, the requirement on the processing capability of the terminal device can be reduced by enhancing occasions of the TypeO-PDCCH CSS monitored by the terminal device from two consecutive slots to two consecutive slot groups.

The technical solutions of the present disclosure will be described in detail by specific embodiments below.

FIG. 2 is a schematic flowchart of a method 200 for wireless communication provided according to an embodiment of the present disclosure. As shown in FIG. 2, the method 200 for wireless communication may include at least part of the following contents.

At S210, a terminal device determines a first time domain duration and/or a second time domain duration, the first time domain duration corresponds to a maximum time domain duration of a first search space set group on a target time domain duration, and the second time domain duration corresponds to a maximum time domain duration of a second search space set group on the target time domain duration.

It is to be noted that the embodiments of the present disclosure may be applicable to the high frequency system, or other communication systems corresponding to larger subcarrier spacing (or where one slot occupies shorter time length), which are not limited in the present disclosure.

In some embodiments of the present disclosure, the search space set of the terminal device is configured on a target time domain duration. In other words, the network device may configure the search space set in units of target time domain durations. Correspondingly, the terminal device may monitor PDCCH candidates in units of target time domain durations, or the terminal device may define the capability to monitor the PDCCH candidates in units of target time domain durations, which is beneficial to reducing the requirement on the capability of the terminal device to monitor the PDCCH candidates.

In some embodiments, the target time domain duration is continuous and non-overlapping in time domain.

Optionally, a start position of a first target time domain duration in a subframe is aligned with the boundary of the subframe.

Optionally, the start position of each target time domain duration is aligned with the boundary of the slot.

In some embodiments, the target time domain duration includes X consecutive slots, where X is a positive integer. The X consecutive slots can be considered as a slot group.

Optionally, the X is related to the subcarrier spacing.

For example, for a subcarrier spacing of 480 kHz, X is 4 slots or 2 slots.

For another example, for a subcarrier spacing of 960 kHz, X is 8 slots or 4 slots.

It is to be noted that in the embodiments of the present disclosure, when a time domain duration is used to describe a position relationship, the time domain duration refers to positions of the time domain duration, such as slots of the time domain duration. Alternatively, time domain duration positions may also be used to represent the positions of the time domain duration, for example, target time domain duration positions are used to represent positions of the target time domain duration, and a time domain duration occupied by the target time domain duration positions is the target time domain duration. Other time domain duration positions hereinafter can be interpreted similarly, and will not be repeated herein.

For example, if the target time domain duration is 8 slots and one subframe includes 32 slots, the target time domain duration positions can correspond to slots 0 to 7, slots 8 to 15, slots 16 to 23 or slots 24 to 31 in one subframe.

In some embodiments of the present disclosure, the search space set of the terminal device may include a first search space set group and a second search space set group. Optionally, the first search space set group and the second first search space set group correspond to different states of the terminal device, or to different stages of the terminal device.

In some embodiments, the first search space set group may be a group of search space sets for the terminal device in a connected state (or in a non-initial access phase) to monitor PDCCH candidates.

As an example, the first search space set group includes, but is not limited to, at least one of the following sets: Typel-PDCCH CSS set, Type3-PDCCH CSS set or USS set configured by dedicated signaling.

Alternatively, the dedicated signaling may include, but is not limited to, dedicated RRC signaling.

In some embodiments, the second search space set group may be a group of search space sets for the terminal device in a non-connected state (or in an initial access phase) to monitor the PDCCH candidates.

As an example, the second search space set group includes, but is not limited to, at least one of the following sets: Typel-PDCCH CSS set, TypeO-PDCCH CSS set, TypeOA-PDCCH CSS set, or Type2-PDCCH CSS set configured by non-dedicated signaling.

Alternatively, the non-dedicated signaling may include, but is not limited to, non-dedicated RRC signaling.

In some embodiments of the present disclosure, the search space sets in the first search space set group and the second search space set group are configured on the target time domain duration.

In some embodiments, the search space sets in the first search space set group of the terminal device are configured on a first time domain duration.

In some embodiments, if the search space sets (denoted as first search space sets for the sake of distinction) in the first search space set group are configured, a maximum time domain duration that the first search space sets can be configured on the target time domain duration is the first time domain duration.

That is, a time domain duration actually corresponding to the first search space sets on the target time domain duration is less than or equal to the first time domain duration.

In some embodiments, the search space sets in the second search space set group of the terminal device are configured on a second time domain duration.

In some embodiments, if the search space sets (denoted as second search space sets for the sake of distinction) in the second search space set group are configured, a maximum time domain duration that the second search space sets can be configured on the target time domain duration is the second time domain duration.

That is, a time domain duration actually corresponding to the second search space sets on the target time domain duration is less than or equal to the second time domain duration.

In some embodiments, the first time domain duration may be predefined, for example, a corresponding first time domain duration is predefined according to the subcarrier spacing; or may be indicated by the network device, for example, the network device indicates the corresponding first time domain duration according to the subcarrier spacing.

In some embodiments, the second time domain duration may be predefined, for example, a corresponding second time domain duration is predefined according to the subcarrier spacing; or may be indicated by the network device, for example, the network device indicates the corresponding second time domain duration according to the subcarrier spacing.

In some embodiments, the first time domain duration includes Y1 consecutive slots, where Y1 is a positive integer.

Optionally, Y1 is predefined, or Y1 is indicated by the network device.

Optionally, Y1 is related to the subcarrier spacing.

In some embodiments, the second time domain duration includes Y2 consecutive slots, where Y2 is a positive integer.

Optionally, Y2 is predefined, or Y2 is indicated by the network device.

Optionally, Y2 is related to the subcarrier spacing.

In some embodiments, the second time domain duration includes one slot.

In other embodiments, the second time domain duration includes two slots.

It is to be noted that the embodiments of the present disclosure do not limit the magnitude relationship between the first time domain duration and the second time domain duration, for example, the first time domain duration is larger than the second time domain duration, or the first time domain duration is smaller than the second time domain duration, or the first time domain duration is equal to the second time domain duration.

In some embodiments, the first time domain duration is overlapped with the second time domain duration in time domain.

In other words, positions of the first time domain duration are overlapped with positions of the second time domain duration in time domain.

For example, the second time domain duration is included in the first time domain duration, or the first time domain duration is included in the second time domain duration, or the first time domain duration is partly overlapped with the second time domain duration in time domain.

It is to be noted that in the embodiments of the present disclosure, the cycle of the first time domain duration and the cycle of the second time domain duration may be same or may be different.

In some embodiments of the present disclosure, the method 200 further includes following operation.

Target positions of the first time domain duration and/or target positions of the second time domain duration are determined.

Hereinafter manners for determining the target positions of the second time domain duration and the target positions of the first time domain duration will be described based on Embodiment 1 and Embodiment 2, respectively.

Embodiment 1

In some embodiments, the terminal device can determine target position(s) (in other words, actual position(s)) of the second time domain duration according to positions of the second search space set. The second search space sets belong to the second search space set group.

Optionally, the second search space set may be the TypeO-PDCCH CSS set.

That is, the terminal device can determine target position(s) of the second time domain duration according to positions of the TypeO-PDCCH CSS set.

Embodiment 1-1: determination of the start position of the second time domain duration.

As an implementation, the terminal device may determine the start position of the second time domain duration according to a start position of the TypeO-PDCCH CSS set.

Optionally, the start position of the TypeO-PDCCH CSS set may be a start slot n0 of the TypeO-PDCCH CSS set.

Optionally, the start position of the TypeO-PDCCH CSS set may be a slot where the first symbol of the TypeO-PDCCH CSS set is located, or the first symbol of the TypeO-PDCCH CSS set.

As an example, the terminal device may determine the start position of the TypeO-PDCCH CSS set as the start position of the second time domain duration. For example, the start slot n0 of the TypeO-PDCCH CSS set is determined as the start slot of the second time domain duration. For another example, a start symbol of the TypeO-PDCCH CSS set is determined as a start symbol of the second time domain duration.

As another example, when there is a certain offset between the start position of the TypeO-PDCCH CSS set and the start position of the second time domain duration, the terminal device may determine the start position of the second time domain duration according to the start position of the TypeO-PDCCH CSS set and the offset.

Optionally, the offset may have a positive value or a negative value, or may be zero.

Optionally, in Mode 1, the terminal device determines the start position of the second time domain duration according to the start slot n0 of the TypeO-PDCCH CSS, for example, the terminal device determines the start slot n0 as the start slot of the second time domain duration.

Optionally, in non-Mode 1, the terminal device determines the start position of the second time domain duration according to the slot where the first symbol of the TypeO-PDCCH CSS is located, or determines the start position of the second time domain duration according to the first symbol of the TypeO-PDCCH CSS.

As another implementation, the terminal device may determine the start position of the second time domain duration according to an end position of the TypeO-PDCCH CSS set.

Optionally, the end position of the TypeO-PDCCH CSS set may be a second slot, for example slot n0+1, corresponding to the TypeO-PDCCH CSS set.

Optionally, the end position of the TypeO-PDCCH CSS set may be a slot following the slot where the first symbol of the TypeO-PDCCH CSS set is located.

As an example, the end position of the TypeO-PDCCH CSS set is determined as the start position of the second time domain duration. For example, the slot n0+1 corresponding to the TypeO-PDCCH CSS set is determined as the start slot of the second time domain duration.

As another example, when there is a certain offset between the end position of the TypeO-PDCCH CSS set and the start position of the second time domain duration, the terminal device may determine the start position of the second time domain duration according to the start position of the TypeO-PDCCH CSS set and the offset.

Optionally, the offset may have a positive value or a negative value, or may be zero.

Optionally, in Mode 1, the terminal device determines the start position of the second time domain duration according to the slot n0+1 corresponding to the TypeO-PDCCH CSS.

Optionally, in non-Mode 1, the terminal device determines the start position of the second time domain duration according to the slot following the slot where the first symbol of the TypeO-PDCCH CSS is located.

After the terminal device determines the start position of the second time domain duration, candidate positions of the second time domain duration may be determined according to the second time domain duration. For example, the candidate positions of the second time domain duration are time domain positions having a length of the second time domain duration and starting from the start position of the TypeO-PDCCH CSS set.

Further, the terminal device may determine target positions (in other words, actual positions) of the second time domain duration according to the candidate positions of the second time domain duration.

First manner: the target positions of the second time domain duration are the candidate positions of the second time domain duration.

For example, the terminal device determines the candidate positions of the second time domain duration as the target positions of the second time domain duration regardless of whether the candidate positions of the second time domain duration are overlapped with positions of two target time domain durations.

In this case, the target positions of the second time domain duration include time domain duration positions where the candidate positions of the second time domain duration are overlapped with the positions of the two target time domain durations.

In some embodiments, according to whether the candidate positions of the second time domain duration are overlapped with the positions of the two target time domain durations, the terminal device may also re-select the determining manner of the start position of the second time domain duration, and/or may process the candidate positions of the second time domain duration to obtain the target positions of the second time domain duration.

For example, when the candidate positions of the second time domain duration are not overlapped with the positions of the two target time domain durations, the terminal device determines the start position of the second time domain duration according to the start position of the TypeO-PDCCH CSS set.

Optionally, when the candidate positions of the second time domain duration are overlapped with the positions of the two target time domain durations, the terminal device determines the end position of the second time domain duration according to the start position of the TypeO-PDCCH CSS set, or the terminal device determines the end position of the second time domain duration according to an end position of the first slot corresponding to the TypeO-PDCCH CSS set.

Optionally, the terminal device determines the end position of the first slot corresponding to the TypeO-PDCCH CSS set as the end position of the second time domain duration. Further, according to the second time domain duration, the start position of the second time domain duration can be determined, so that the candidate positions of the second time domain duration can be obtained. Optionally, the solution is applied to a case that the candidate positions of the second time domain duration are overlapped with the positions of the two target time domain durations.

It is to be noted that when the candidate positions of the second time domain duration are overlapped with the positions of the two target time domain durations, the target positions of the second time domain duration obtained by processing the candidate positions of the second time domain duration by the terminal device are not overlapped with the positions of the two target time domain durations.

The processing manner of the candidate positions of the second time domain duration by the terminal device is described based on a second manner and a third manner.

Second manner: the target positions of the second time domain duration include only time domain duration positions where the candidate positions of the second time domain duration are overlapped with positions of a first target time domain duration of the two target time domain durations.

That is, when the candidate positions of the second time domain duration are overlapped with the positions of the two target time domain durations, the terminal device may discard a portion of the candidate positions of the second time domain duration, which is overlapped with positions of one of the two target time domain durations.

In some embodiments, if the second search space set group has a search space set configured on discarded time domain duration positions in the candidate positions of the second time domain duration, the search space set is discarded, i.e., the terminal device does not monitor the PDCCH candidates based on the search space set.

Third manner: a portion of the candidate positions of the second time domain duration that is overlapped with positions of one of two target time domain durations is translated into positions of the other one of the two target time domain durations, so as to obtain the target positions of the second time domain duration.

That is, when the candidate positions of the second time domain duration are overlapped with the positions of the two target time domain durations, the terminal device may translate the portion of the candidate positions of the second time domain duration that is overlapped with positions of one of the two target time domain durations into positions of the other one of the two target time domain durations, so that the target positions of the second time domain duration are located in positions of a same target time domain duration.

For example, when the positions of the two target time domain durations that are overlapped with the candidate positions of the second time domain duration include positions of a first target time domain duration and positions of a second target time domain duration, the target positions of the second time domain duration include: time domain duration positions where the candidate positions of the second time domain duration are overlapped with the positions of the first target time domain duration, and third time domain duration positions in the positions of the first target time domain duration. The third time domain duration positions are obtained by translating, time domain duration positions where the candidate positions of the second time domain duration are overlapped with the positions of the second target time domain duration, into the positions of the first target time domain duration.

Optionally, a start position of the third time domain duration positions is aligned with a start position of the positions of the first target time domain duration.

That is, when the candidate positions of the second time domain duration are overlapped with the positions of the two target time domain durations, the terminal device may translate the portion of the candidate positions of the second time domain duration that is overlapped with positions of one of the two target time domain durations into the start position of positions of the other one of the two target time domain durations.

In some embodiments, the positions of the first target time domain duration are positions of first one of the two target time domain durations.

In some embodiments, the positions of the second target time domain duration are positions of second one of the two target time domain durations.

That is, the portion of the candidate positions of the second time domain duration that is overlapped with the positions of the second one of the two target time domain durations is translated, and the portion of the candidate positions of the second time domain duration that is overlapped with the positions of the first one of the two target time domain durations remains unchanged.

In other embodiments, the positions of the first target time domain duration are positions of second one of the two target time domain durations.

In other embodiments, the positions of the second target time domain duration are positions of first one of the two target time domain durations.

That is, the portion of the candidate positions of the second time domain duration that is overlapped with the positions of the first one of the two target time domain durations is translated, and the portion of the candidate positions of the second time domain duration that is overlapped with the positions of the second one of the two target time domain durations remains unchanged.

Fourth manner: it is not expected that positions of the second time domain duration configured for the terminal device are overlapped with positions of two target time domain durations, which is recorded as the fourth manner.

In some embodiments, the network device may configure the TypeO-PDCCH CSS set and/or configure the second time domain duration such that the target positions of the second time domain duration are not overlapped with the positions of the two target time domain durations.

For example, the second time domain duration is configured to be 1 slot.

For another example, the start slot n0 of the TypeO-PDCCH CSS set is configured to be not located on the end position of the target time domain duration positions.

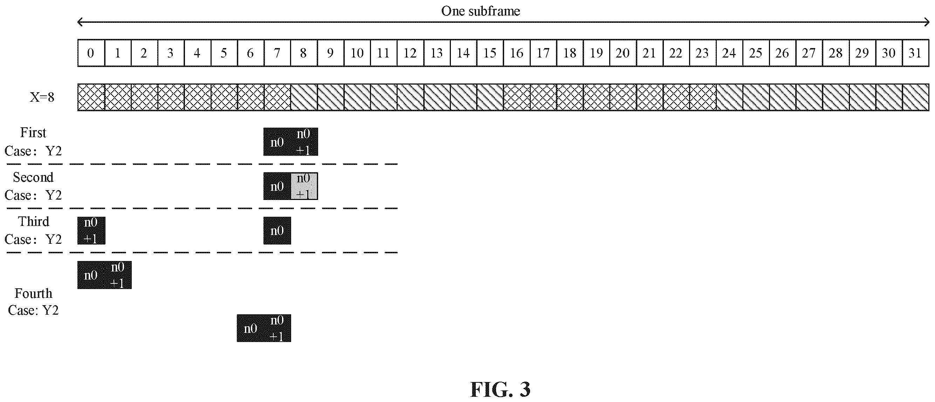

The manner of determining the target positions of the second time domain duration will be described with reference to a specific example shown in FIG. 3.

In the example of FIG. 3, the second time domain duration includes 2 slots, i.e., Y2=2, and the target time domain duration includes 8 slots, i.e., X=8. One subframe includes 32 slots, where slot 0 to slot 7 correspond to the positions of the first target time domain duration, slot 8 to slot 15 correspond to the positions of the second target time domain duration, slot 16 to slot 23 correspond to the positions of the third target time domain duration, and slot 24 to slot 31 correspond to the positions of the fourth target time domain duration.

It is to be noted that in FIG. 3, slot n0 represents a first slot corresponding to the TypeO-PDCCH CSS set associated with a target SSB detected by the terminal device, and slot n0+1 represents a second slot corresponding to the TypeO-PDCCH CSS set associated with the target SSB detected by the terminal device.

When the second time domain duration is two slots and the start position of the second time domain duration is determined according to the start position of the TypeO-PDCCH CSS set, it may occur that the candidate positions of the second time domain duration are overlapped with the positions of the two target time domain durations.

It is taken as an example that the start slot n0 of the TypeO-PDCCH CSS is determined as the start position of the second time domain duration, the start slot n0 of the TypeO-PDCCH CSS set is slot 7, and the candidate positions of the second time domain duration include slot n0 and slot n0+1, i.e., slot 7 and slot 8. Therefore, the candidate positions of the second time domain duration are overlapped with the positions of the two target time domain durations (i.e., the positions of the first target time domain duration and the positions of the second target time domain duration), which corresponds to the first case in FIG. 3.

In this case, for the aforementioned first manner, the terminal device may determine the candidate positions of the second time domain duration as the target positions of the second time domain duration, i.e., the target positions of the second time domain duration include the slot 7 and the slot 8.

For the aforementioned second manner, the terminal device may discard the portion of the candidate positions of the second time domain duration that is overlapped with positions of one of the two target time domain durations. For example, a portion of the candidate positions of the second time domain duration that is overlapped with the positions of the second target time domain duration, i.e., the slot 8, is discarded, and the target position of the second time domain duration includes the slot 7, which corresponds to the second case in FIG. 3.

For the aforementioned third manner, the terminal device may translate the portion of the candidate positions of the second time domain duration that is overlapped with positions of one of the two target time domain durations into positions of the other one of the two target time domain durations. For example, the portion (i.e., slot 8) of the candidate positions of the second time domain duration that is overlapped with the positions of the second target time domain duration is translated into the positions of the first target time domain duration. Specifically, the portion is translated to the start position (i.e., slot 0) of the positions of the first target time domain duration, and the target positions of the second time domain duration include the slot 7 and the slot 0, which corresponds to the third case in FIG. 3.

For the aforementioned fourth manner, the candidate positions of the second time domain duration determined based on the network device configuration (for example, TypeO-PDCCH CSS configuration) are not overlapped with the positions of the two target time domain durations. In this case, the candidate positions of the second time domain duration are the target positions of the second time domain duration. In this case, the candidate positions of the second time domain duration that may be configured are within one target time domain duration. For example, within the first target time domain duration, the candidate positions of the second time domain duration that may be configured are one of: slot 0 and slot 1, slot 1 and slot 2, slot 2 and slot 3, slot 3 and slot 4, slot 4 and slot 5, slot 5 and slot 6, or slot 6 and slot 7.

For example, when the start slot of the TypeO-PDCCH CSS set configured by the network device is slot 0, the target positions of the second time domain duration determined according to the start slot of the TypeO-PDCCH CSS set include slot 0 and slot 1. For another example, when the start slot of the TypeO-PDCCH CSS set configured by the network device is slot 6, the target positions of the second time domain duration determined according to the start slot of the TypeO-PDCCH CSS set include slot 6 and slot 7, which corresponds to the fourth case in FIG. 3.

Embodiment 1-2: determination of the end position of the second time domain duration.

As an implementation, the terminal device determines the end position of the second time domain duration according to the start position of the TypeO-PDCCH CSS set.

Optionally, the start position of the TypeO-PDCCH CSS set may be the start slot n0 of the TypeO-PDCCH CSS set.

Optionally, the start position of the TypeO-PDCCH CSS set may be a slot where the first symbol of the TypeO-PDCCH CSS set is located, or the first symbol of the TypeO-PDCCH CSS set.

As an example, the terminal device determines the start position of the TypeO-PDCCH CSS set as the end position of the second time domain duration.

As another example, when there is a certain offset between the start position of the TypeO-PDCCH CSS set and the end position of the second time domain duration, the terminal device may determine the end position of the second time domain duration according to the end position of the TypeO-PDCCH CSS set and the offset.

Optionally, the offset may have a positive value or a negative value, or may be zero.

For example, in Mode 1, the terminal device determines the end position of the second time domain duration according to slot n0 of the TypeO-PDCCH CSS.

For another example, in non-Mode 1, the terminal device determines the end position of the second time domain duration according to the slot where the first symbol of the TypeO-PDCCH CSS is located.

As another implementation, the terminal device determines the end position of the second time domain duration according to the end position of the TypeO-PDCCH CSS set.

Optionally, the end position of the TypeO-PDCCH CSS set may be a second slot corresponding to the TypeO-PDCCH CSS set, for example, slot n0+1.

Optionally, the end position of the TypeO-PDCCH CSS set may be a slot following the slot where the first symbol of the TypeO-PDCCH CSS set is located.

As an example, the terminal device determines the end position of the TypeO-PDCCH CSS set as the end position of the second time domain duration.

As another example, when there is a certain offset between the end position of the TypeO-PDCCH CSS set and the end position of the second time domain duration, the terminal device may determine the end position of the second time domain duration according to the end position of the TypeO-PDCCH CSS set and the offset.

Optionally, the offset may have a positive value or a negative value, or may be zero.

For example, in Mode 1, the terminal device determines the end position of the second time domain duration according to the slot n0+1 of the TypeO-PDCCH CSS.

For another example, in non-Mode 1, the terminal device determines the end position of the second time domain duration according to the slot following the slot where the first symbol of the TypeO-PDCCH CSS is located.

After the terminal device determines the end position of the second time domain duration, candidate positions of the second time domain duration may be determined according to the second time domain duration. Further, the terminal device may determine the target positions (in other words, actual positions) of the second time domain duration according to the candidate positions of the second time domain duration. Reference is made to the related descriptions of the first manner to the fourth manner in the Embodiment 1-1 for the specific determining manners, which will not be repeated herein for sake of brevity.

Embodiment 2: determination of positions of the first time domain duration.

In some embodiments, the terminal device may determine the positions of the first time domain duration according to the positions of the second time domain duration.

For example, the terminal device may determine a start position of the first time domain duration according to a start position or an end position of the second time domain duration.

Optionally, there is a certain offset between the start position of the first time domain duration and the start position or end position of the second time domain duration. In this case, the terminal device may determine the start position of the second time domain duration according to the start position or end position of the second time domain duration together with the offset.

As an example rather than a limitation, the start position of the first time domain duration has a first offset relative to the start position of the second time domain duration.

Alternatively, the start position of the first time domain duration has the first offset relative to the end position of the second time domain duration.

Alternatively, the start position of the second time domain duration has the first offset relative to the start position of the first time domain duration

Alternatively, the end position of the second time domain duration has the first offset relative to the start position of the first time domain duration.

Optionally, the first offset may be predefined, or determined according to predefined rules, or configured by the network device.

Optionally, the first offset may be configured together with the first time domain duration and the second time domain duration, or may be configured separately.

As another example, the terminal device may determine an end position of the first time domain duration according to the start position or the end position of the second time domain duration.

Optionally, there is a certain offset between the end position of the first time domain duration and the start position or end position of the second time domain duration. In this case, the terminal device may determine the end position of the second time domain duration according to the start position or end position of the second time domain duration together with the offset.

As an example rather than a limitation, the end position of the first time domain duration has a second offset relative to the start position of the second time domain duration.

Alternatively, the end position of the first time domain duration has the second offset relative to the end position of the second time domain duration.

Alternatively, the start position of the second time domain duration has the second offset relative to the end position of the first time domain duration.

Alternatively, the end position of the second time domain duration has the second offset relative to the end position of the first time domain duration

Optionally, the second offset may be predefined, or determined according to predefined rules, or configured by the network device.

Optionally, the second offset may be configured together with the first time domain duration and the second time domain duration, or may be configured separately.

In some embodiments, the network device may transmit first indication information to the terminal device, and the first indication information is used for indicating at least one of: the first time domain duration, the second time domain duration, the first offset or the second offset.

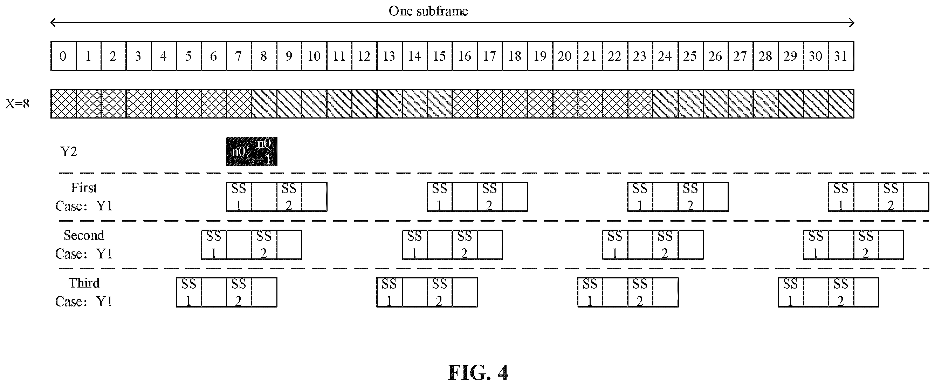

FIG. 4 shows an example of configuring the search space set. As shown in FIG. 4, the target time domain duration includes 8 slots, i.e., X=8; the first time domain duration Y1=4; and the second time domain duration Y2=2. There is a first offset between the start position of Y1 and the start position of Y2, and a value of the first offset is one of {0, 1, 2}. The first case in FIG. 4 corresponds to a value 0 of the first offset, the second case in FIG. 4 corresponds to a value 1 of the first offset, and the third case in FIG. 4 corresponds to a value 2 of the first offset. SS1 and SS2 are search space sets in the first search space set group. In this example, the cycle of Y1 is different from that of Y2.

After the terminal device determines the start position or the end position of the first time domain duration, it may further determine the candidate positions of the first time domain duration according to the first time domain duration.

Similar to the aforementioned Embodiment 1, the terminal device may also determine the target positions (in other words, the actual positions) of the first time domain duration according to the candidate positions of the first time domain duration.

First manner: the target positions of the first time domain duration are the candidate positions of the first time domain duration.

For example, the terminal device determines the candidate positions of the first time domain duration as the target positions of the first time domain duration regardless of whether the candidate positions of the first time domain duration are overlapped with positions of two target time domain durations.

In this case, the target positions of the first time domain duration include time domain duration positions where the candidate positions of the first time domain duration are overlapped with the positions of the two target time domain durations.

In some embodiments, the terminal device may also process the candidate positions of the first time domain duration to obtain the target positions of the first time domain duration.

It is to be noted that when the candidate positions of the first time domain duration are overlapped with the positions of the two target time domain durations, the target positions of the first time domain duration obtained by processing the candidate positions of the first time domain duration by the terminal device are not overlapped with the positions of the two target time domain durations.

The processing manner of the candidate positions of the first time domain duration by the terminal device is described based on a second manner and a third manner.

Second manner: the target positions of the first time domain duration include only time domain duration positions where the candidate positions of the first time domain duration are overlapped with positions of a first target time domain duration of the two target time domain durations.

That is, when the candidate positions of the first time domain duration are overlapped with positions of two target time domain durations, the terminal device may discard a portion of the candidate positions of the first time domain duration, which is overlapped with positions of one of the two target time domain durations.

In some embodiments, if the first search space set group has a search space set configured on discarded time domain duration positions in the candidate positions of the first time domain duration, the search space set is discarded.

Third manner: a portion of the candidate positions of the first time domain duration that is overlapped with positions of one of two target time domain durations is translated into positions of the other one of the two target time domain durations.

That is, when the candidate positions of the first time domain duration are overlapped with the positions of the two target time domain durations, the terminal device may translate the portion of the candidate positions of the first time domain duration that is overlapped with positions of one of two target time domain durations into positions of the other one of the two target time domain durations, so that the target positions of the first time domain duration are located in positions of a same target time domain duration.

For example, when the positions of the two target time domain durations that are overlapped with the candidate positions of the first time domain duration include positions of a third target time domain duration and positions of a fourth target time domain duration, the target positions of the first time domain duration include: time domain duration positions where the candidate positions of the first time domain duration are overlapped with the positions of the third target time domain duration, and fourth time domain duration positions in the positions of the third target time domain duration. The fourth time domain duration positions are obtained by translating, time domain duration positions where the candidate positions of the first time domain duration are overlapped with the positions of the fourth target time domain duration, into the positions of the third target time domain duration.

Optionally, a start position of the fourth time domain duration positions is aligned with a start position of the positions of the third target time domain duration.

That is, when the candidate positions of the first time domain duration are overlapped with the positions of the two target time domain durations, the terminal device may translate the portion of the candidate positions of the first time domain duration that is overlapped with positions of one of the two target time domain durations into the start position of positions of the other one of the two target time domain durations.

In some embodiments, the positions of the third target time domain duration are positions of first one of the two target time domain durations.

In some embodiments, the positions of the fourth target time domain duration are positions of second one of the two target time domain durations.

That is, the portion of the candidate positions of the first time domain duration that is overlapped with the positions of the second one of the two target time domain durations is translated, and the portion of the candidate positions of the first time domain duration that is overlapped with the positions of the first one of the two target time domain durations remains unchanged.

In other embodiments, the positions of the third target time domain duration are positions of second one of the two target time domain durations.

In other embodiments, the positions of the fourth target time domain duration are positions of first one of the two target time domain durations.

That is, the portion of the candidate positions of the first time domain duration that is overlapped with the positions of the first one of the two target time domain durations is translated, and the portion of the candidate positions of the first time domain duration that is overlapped with the positions of the second one of the two target time domain durations remains unchanged.

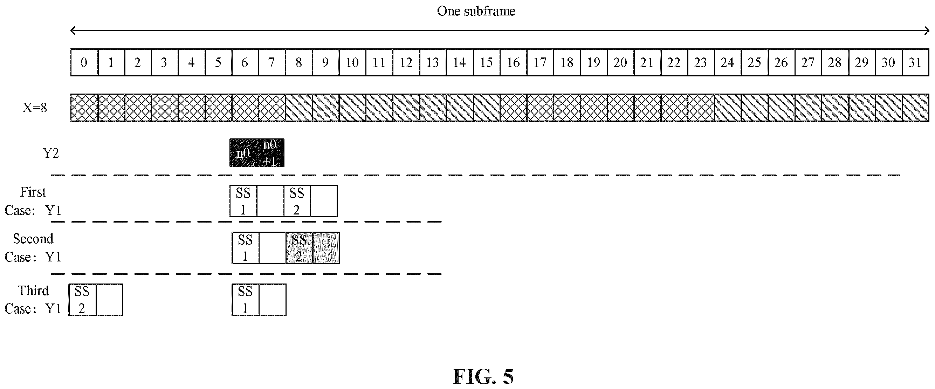

The manner of determining the target positions of the first time domain duration will be described with reference to a specific example shown in FIG. 5.

In the example of FIG. 5, the second time domain duration includes 2 slots, i.e., Y2=2, the first time domain duration includes 4 slots, i.e., Y1=4, and the target time domain duration includes 8 slots, i.e., X=8. One subframe includes 32 slots, where slot 0 to slot 7 correspond to the positions of the first target time domain duration, slot 8 to slot 15 correspond to the positions of the second target time domain duration, slot 16 to slot 23 correspond to the positions of the third target time domain duration, and slot 24 to slot 31 correspond to the positions of the fourth target time domain duration. SSB1 and SSB2 are search space sets in the first search space set group.

It is to be noted that in FIG. 5, slot n0 represents a first slot corresponding to the TypeO-PDCCH CSS set associated with a target SSB detected by the terminal device, and slot n0+1 represents a second slot corresponding to the TypeO-PDCCH CSS set associated with the target SSB detected by the terminal device.

In the example of FIG. 5, the offset between the start position of the first time domain duration and the start position of the second time domain duration is 0.

As shown in FIG. 5, candidate positions of the first time domain duration determined according to the positions of the second time domain duration are overlapped with positions of two target time domain durations (i.e., the positions of the first target time domain duration and the positions of the second target time domain duration).

In this case, for the aforementioned first manner, the terminal device may determine the candidate positions of the first time domain duration as the target positions of the first time domain duration, i.e., the target positions of the first time domain duration include the slot 6 to the slot 9, which corresponds to the first case in FIG. 5.

For the aforementioned second manner, the terminal device may discard the portion of the candidate positions of the first time domain duration that is overlapped with positions of one of the two target time domain durations. For example, a portion of the candidate positions of the first time domain duration that is overlapped with the positions of the second target time domain duration, i.e., the slot 8 and the slot 9, is discarded, and the target positions of the first time domain duration include the slot 6 and the slot 7, which corresponds to the second case in FIG. 5.

For the aforementioned third manner, the terminal device may translate the portion of the candidate positions of the first time domain duration that is overlapped with positions of one of the two target time domain durations into positions of the other one of the two target time domain durations. For example, the portion (i.e., the slot 8 and the slot 9) of the candidate positions of the first time domain duration that is overlapped with the positions of the second target time domain duration is translated into the positions of the first target time domain duration. Specifically, the portion is translated to the start position of the positions of the first target time domain duration, and the target positions of the first time domain duration include the slot 0, the slot 1, the slot 6 and the slot 7, which corresponds to the third case in FIG. 5.

In some embodiments of the present disclosure, the TypeO-PDCCH CSS set is associated with a first SSB, which is a current target SSB.

Optionally, the first SSB is determined by the terminal device. For example, the first SSB is an SSB selected by the terminal device during the initial access stage.

Optionally, the first SSB is indicated by the network device. For example, the first SSB is determined according to Media Access Control Control Element (MAC CE) signaling of the network device. Alternatively, the first SSB is determined according to a Transmission Configuration Indicator (TCI) of the network device. For example, after the terminal device is in the connected state, the terminal device may receive first configuration information from the network device, and the first configuration information is used to indicate the target SSB.

In some embodiments of the present disclosure, when the network device transmits multiple SSBs, such as a first SSB and a second SSB, the first SSB is associated with a first TypeO-PDCCH CSS set, first time domain duration 1, second time domain duration 1, and first offset 1. The second SSB is associated with a second TypeO-PDCCH CSS set, first time domain duration 2, second time domain duration 2, and a first offset 2.

Optionally, the first time domain duration 1 is the same as the first time domain duration 2. Alternatively, the first time domain duration 1 is different from the first time domain duration 2.

Optionally, the second time domain duration 1 is the same as the second time domain duration 2. Alternatively, the second time domain duration 1 is different from the second time domain duration 2.

Optionally, the first offset 1 is the same as the first offset 2. Alternatively, the first offset 1 is different from the first offset 2.

In some embodiments of the present disclosure, when the network device transmits multiple SSBs, such as a first SSB and a second SSB, the first SSB is associated with a first TypeO-PDCCH CSS set, first time domain duration 1, second time domain duration 1, and first offset 1. The second SSB is associated with a second TypeO-PDCCH CSS set, first time domain duration 2, second time domain duration 2, and a first offset 2.

Optionally, the first time domain duration 1 is the same as the first time domain duration 2. Alternatively, the first time domain duration 1 is different from the first time domain duration 2.

Optionally, the second time domain duration 1 is the same as the second time domain duration 2. Alternatively, the second time domain duration 1 is different from the second time domain duration 2.

Optionally, the first offset 1 is the same as the first offset 2. Alternatively, the first offset 1 is different from the first offset 2.

In some embodiments of the present disclosure, when the target SSB is changed, or when the slot n0 corresponding to the TypeO-PDCCH CSS set is changed, the terminal device may re-determine the target positions of the first time domain duration and/or the target positions of the second time domain duration.

Alternatively, when the target SSB is changed or the slot n0 corresponding to the TypeO-PDCCH CSS set is changed, the network device may transmit second indication information to the terminal device, and the second indication information is used to indicate at least one of:

an updated first time domain duration, an updated second time domain duration, an updated first offset, or an updated second offset.

That is, before or after the target SSB is updated, the network device may indicate relevant information for determining the target positions of the first time domain duration and/or the target positions of the second time domain duration.

Hereinafter, a manner for updating the target positions of the first time domain duration and/or the target positions of the second time domain duration will be described based on Embodiment 3 and Embodiment 4, respectively.

Embodiment 3: update of target positions of the second time domain duration.

In some embodiments, the terminal device may determine the target positions of the second time domain duration according to the positions of the TypeO-PDCCH CSS set associated with the updated target SSB.

For example, when the updated target SSB is the second SSB, the terminal device may determine the target positions of the second time domain duration according to the positions of the TypeO-PDCCH CSS set associated with the second SSB.

It is to be noted that in the Embodiment 3, specific implementations of determining the target positions of the second time domain duration according to the positions of the TypeO-PDCCH CSS set associated with the updated target SSB can refer to the relevant description in the Embodiment 1, and will not be repeated herein for sake of brevity.

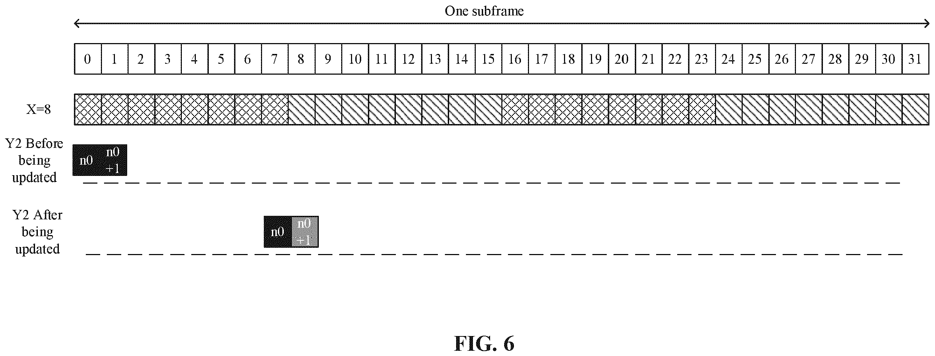

FIG. 6 shows an example of updating the target positions of the second time domain duration. As shown in FIG. 6, when the slot n0 associated with the target SSB is updated from a first slot of positions of a target time domain duration in a subframe to a last slot of the positions of the target time domain duration, the number of slots included in the target positions of the second time domain duration is changed from two to one based on the aforementioned second manner.

In some embodiments of the present disclosure, a relative position of an updated second target search space set in updated target positions of the second time domain duration is unchanged from a relative position of a second target search space set before being updated in target positions, before being updated, of the second time domain duration, and the second target search space set belongs to the second search space set group.

That is, before and after updating, the relative positions of the search space set in the corresponding time domain duration positions remain unchanged.

For example, the target positions, before being updated, of the second time domain duration are slot 6 and slot 7, the second target search space set is configured on the slot 6, and the updated target positions of the second time domain duration are slot 0 and slot 1. At this time, the second search space set falls outside the updated target positions of the second time domain duration, so the slot corresponding to the second target search space set may be updated to slot 0.

In some embodiments, when a second search space set is configured on discarded candidate position(s) of the second time domain duration, the second search space set is discarded. The second search space set belongs to the second search space set group.

Embodiment 4: update of target positions of the first time domain duration.

In some embodiments, the terminal device may determine the updated target positions of the first time domain duration based on the updated target positions of the second time domain duration.

It is to be noted that specific implementations of determining the updated target positions of the first time domain duration according to the updated target positions of the second time domain duration may refer to the relevant description in the Embodiment 2, and will not be repeated herein for sake of brevity.

In some implementations, the positions of the first time domain duration in positions of each target time domain duration are updated according to updated positions of the second time domain duration. In this case, the relative position of the first time domain duration in positions of each target time domain duration remains unchanged.

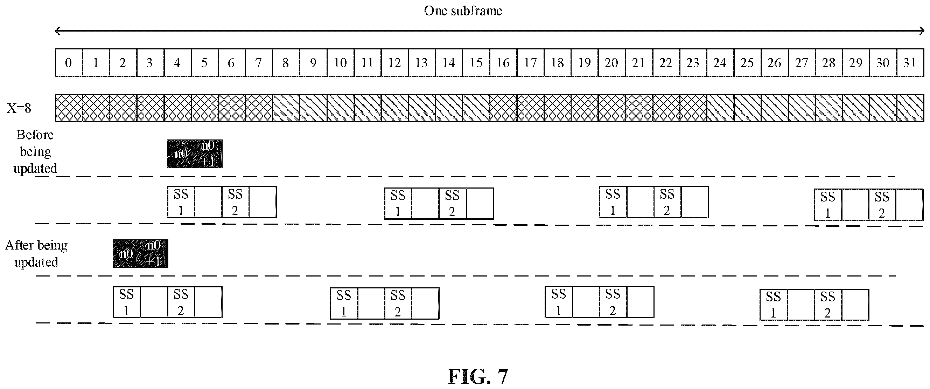

FIG. 7 shows an example of updating the target positions of the first time domain duration. As shown in FIG. 7, the updated positions of the second time domain duration are moved forward by 2 slots relative to the positions, before being updated, of the second time domain duration, then in each cycle of the first time domain duration, the updated positions of the first time domain duration are moved forward by 2 slots relative to the positions, before being updated, of the first time domain duration.

In other implementations, only the positions of the first time domain duration that are overlapped with the updated second time domain duration are updated according to the updated positions of the second time domain duration. The positions of the first time domain duration that are not overlapped with the second time domain duration remain unchanged.

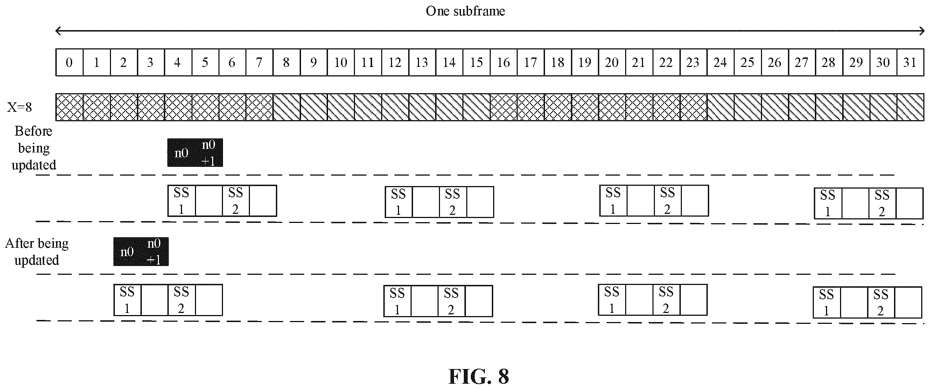

FIG. 8 shows another example of updating the target positions of the first time domain duration. As shown in FIG. 8, the updated positions of the second time domain duration are moved forward by 2 slots relative to the positions, before being updated, of the second time domain duration, then for the first time domain duration that is overlapped with the updated second time domain duration, the updating manner is to move forward by 2 slots, and the positions of the first time domain duration that are not overlapped with the updated second time domain duration remain unchanged.

In some embodiments of the present disclosure, if the updated positions of the first time domain duration are overlapped with the positions of the two target time domain durations, the first manner to third manner in the aforementioned Embodiment 2 may be used for processing, and will not be repeated herein for sake of brevity.

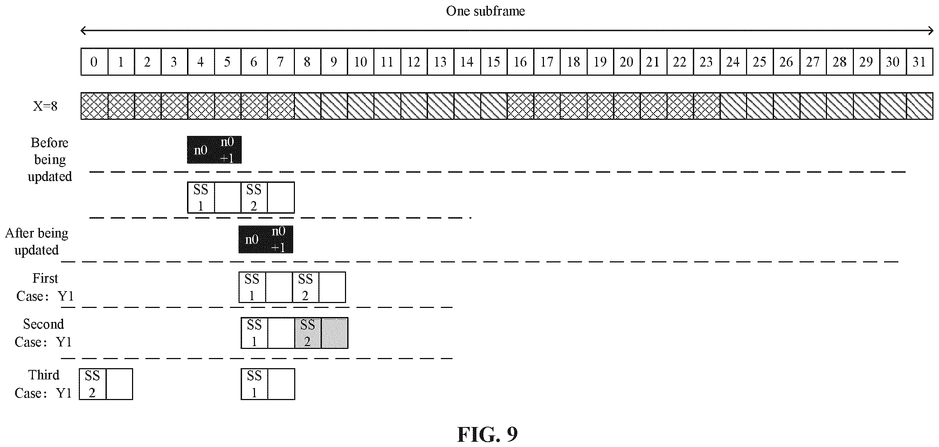

FIG. 9 shows yet another example of updating the target positions of the first time domain duration. As shown in FIG. 9, the updated positions of the first time domain duration include slot 6 to slot 9, which are overlapped with positions of two target time domain durations.

In this case, with the first manner in the aforementioned Embodiment 2, the candidate positions of the first time domain duration may be determined as the target positions of the first time domain duration, that is, the target positions of the first time domain duration includes slot 6 to slot 9, which corresponds to the first case in FIG. 9.

With the second manner in the aforementioned Embodiment 2, the portion of the candidate positions of the first time domain duration that is overlapped with positions of one of the two target time domain durations may be discarded, for example, the portion of the candidate positions of the first time domain duration that is overlapped with the positions of the second target time domain duration, i.e., slot 8 and slot 9, is discarded, then the target positions of the first time domain duration include slot 6 and slot 7, which corresponds to the second case in FIG. 9.

With the third manner in the aforementioned Embodiment 2, the portion of the candidate positions of the first time domain duration that is overlapped with positions of one of two target time domain durations may be translated into positions of the other one of the two target time domain durations, for example, the portion (i.e., slot 8 and slot 9) of the candidate positions of the first time domain duration that is overlapped with the positions of the second target time domain duration may be translated into the positions of the first target time domain duration. Specifically, the portion is translated to the start position of the positions of the first target time domain duration, and the target positions of the first time domain duration include the slot 0, the slot 1, the slot 6 and the slot 7, which corresponds to the third case in FIG. 9.

In some embodiments of the present disclosure, a relative position of an updated first target search space set in updated target positions of the first time domain duration is unchanged from a relative position of a first target search space set before being updated in target positions, before being updated, of the first time domain duration, and the first target search space set belongs to the first search space set group.

That is, before and after updating, the relative positions of the search space set in the corresponding time domain duration positions remain unchanged.

For example, the target positions, before being updated, of the first time domain duration are slot 6 and slot 7, the first target search space set is configured on the slot 6, and the updated target positions of the first time domain duration are slot 3 and slot 4. At this time, the first search space set falls outside the updated target positions of the first time domain duration, so the slot corresponding to the first target search space set may be updated to slot 3.

In some embodiments, a first search space set is configured on discarded candidate position(s) of the first time domain duration, and the first search space set is discarded. The first search space set belongs to the first search space set group.

Therefore, in the embodiment of the present disclosure, in the communication system, the terminal device can divide the search space sets of the terminal device into two search space set groups, and different search space set groups correspond to different time domain duration configurations, which is beneficial to reducing the requirement on the processing capability of the terminal device.

Further, the terminal device can determine, according to the positions of the TypeO-PDCCH CSS set, the positions of the second time domain duration where the second search space set group is configured, and further determine, according to the positions of the second time domain duration, the positions of the first time domain duration where the first search space set group is configured. Correspondingly, the network device can also determine, according to the positions of the TypeO-PDCCH CSS set, the positions of the second time domain duration where the second search space set group is configured, and further determine, according to the positions of the second time domain duration, the positions of the first time domain duration where the first search space set group is configured. In this way, it is beneficial to ensuring that the terminal device and the network device have consistent understanding of the search space set configuration.

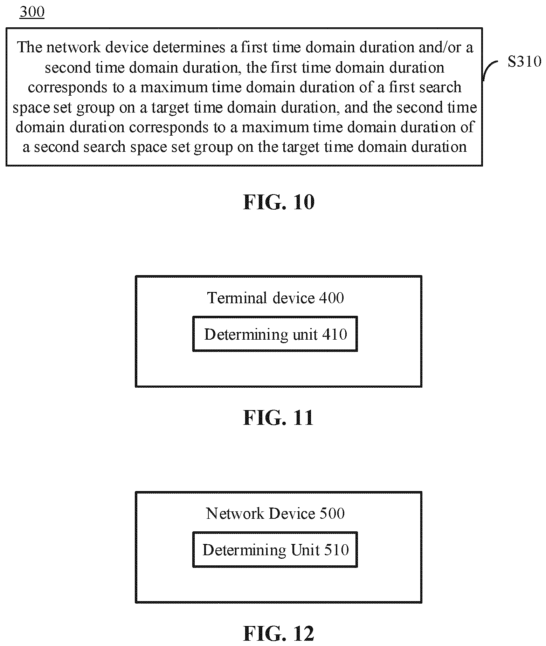

The method for wireless communication according to the embodiment of the present disclosure is described in detail above from the perspective of the terminal device with reference to FIGS. 2 to 9, and the method for wireless communication according to another embodiment of the present disclosure is described in detail below from the perspective of the network device with reference to FIG. 10. It is to be noted that the description on the network device side and the description on the terminal device side correspond to each other, and similar descriptions may be referred to above and will not be repeated herein to avoid repetition.

FIG. 10 is a schematic flowchart of a method 300 for wireless communication according to another embodiment of the present disclosure. The method 300 may be performed by the network device in the communication system shown in FIG. 1. As shown in FIG. 10, the method 300 including the following contents.

At S310, the network device determines a first time domain duration and/or a second time domain duration, the first time domain duration corresponds to a maximum time domain duration of a first search space set group on a target time domain duration, and the second time domain duration corresponds to a maximum time domain duration of a second search space set group on the target time domain duration.

It is to be noted that in the method 300, The specific implementations of the network device determining the first time domain duration, the second time domain duration, and determining the target positions of the time domain duration, the target positions of the second time domain duration, updating the first time domain duration, the second time domain duration, and updating the target positions of the time domain duration, the target positions of the second time domain duration are similar to that of the terminal device side, and will not be repeated herein for sake of brevity.

In some embodiments, the first search space set group includes at least one of:
type1 physical downlink control channel common search space (Type1-PDCCH CSS) set, type3 physical downlink control channel common search space (Type3-PDCCH CSS) set or UE-specific search space (USS) set configured by dedicated signaling.

In some embodiments, the second search space set group includes at least one of:
Typel-PDCCH CSS set, type0 physical downlink control channel common search space (Type0-PDCCH CSS) set, type0A physical downlink control channel common search space (Type0A-PDCCH CSS) set or type2 physical downlink control channel common search space (Type2-PDCCH CSS) set configured by non-dedicated signaling.

In some embodiments, the first time domain duration is overlapped with the second time domain duration in time domain.

In some embodiments, the first time domain duration includes Y1 consecutive slots, where Y1 is a positive integer; and/or
the second time domain duration includes Y2 consecutive slots, where Y2 is a positive integer.

In some embodiments, the second time domain duration includes one slot; or the second time domain duration includes two slots.

In some embodiments, target position(s) of the second time domain duration are determined according to positions of a TypeO-PDCCH CSS set corresponding to the second time domain duration in the second search space set group.

In some embodiments, a start position of the second time domain duration is determined according to a start position of the TypeO-PDCCH CSS set.

In some embodiments, when candidate positions of the second time domain duration are not overlapped with positions of two target time domain durations, a start position of the second time domain duration is determined according to a start position of the TypeO-PDCCH CSS set, and the candidate positions of the second time domain duration are determined according to the start position of the TypeO-PDCCH CSS set and the second time domain duration.

In some embodiments, when candidate positions of the second time domain duration are overlapped with positions of two target time domain durations, the target positions of the second time domain duration include time domain duration positions where the candidate positions of the second time domain duration are overlapped with the positions of the two target time domain durations, and the candidate positions of the second time domain duration are determined according to a start position of the TypeO-PDCCH CSS set and the second time domain duration.

In some embodiments, when candidate positions of the second time domain duration are overlapped with positions of two target time domain durations, the target positions of the second time domain duration include only time domain duration positions where the candidate positions of the second time domain duration are overlapped with positions of a first target time domain duration of the two target time domain durations, and the candidate positions of the second time domain duration are determined according to a start position of the TypeO-PDCCH CSS set and the second time domain duration.

In some embodiments, when candidate positions of the second time domain duration are overlapped with positions of two target time domain durations, the target positions of the second time domain duration include: time domain duration positions where the candidate positions of the second time domain duration are overlapped with positions of a first target time domain duration of the two target time domain durations, and third time domain duration positions in the positions of the first target time domain duration;

the third time domain duration positions are obtained by translating time domain duration positions where the candidate positions of the second time domain duration are overlapped with positions of a second target time domain duration of the two target time domain durations into the positions of the first target time domain duration; and

the candidate positions of the second time domain duration are determined according to a start position of the TypeO-PDCCH CSS set and the second time domain duration.

In some embodiments, a start position of the third time domain duration positions is aligned with a start position of the positions of the first target time domain duration.

In some embodiments, the positions of the first target time domain duration are positions of first one of the two target time domain durations; and/or

the positions of the second target time domain duration are positions of second one of the two target time domain durations.

In some embodiments, an end position of the second time domain duration is determined according to a start position of the TypeO-PDCCH CSS set; or

the end position of the second time domain duration is determined according to an end position of the TypeO-PDCCH CSS set.

In some embodiments, positions of the first time domain duration are determined according to positions of the second time domain duration.

In some embodiments, a start position of the first time domain duration is determined according to a start position of the second time domain duration; or

the start position of the first time domain duration is determined according to an end position of the second time domain duration.

In some embodiments, the start position of the first time domain duration has a first offset relative to the start position of the second time domain duration; or

the start position of the first time domain duration has the first offset relative to the end position of the second time domain duration; or

the start position of the second time domain duration has the first offset relative to the start position of the first time domain duration; or

the end position of the second time domain duration has the first offset relative to the start position of the first time domain duration.

In some embodiments, an end position of the first time domain duration is determined according to a start position of the second time domain duration; or
the end position of the first time domain duration is determined according to an end position of the second time domain duration.

In some embodiments, an end position of the first time domain duration has a second offset relative to the start position of the second time domain duration; or

the end position of the first time domain duration has the second offset relative to the end position of the second time domain duration; or
the start position of the second time domain duration has the second offset relative to the end position of the first time domain duration; or
the end position of the second time domain duration has the second offset relative to the end position of the first time domain duration.

In some embodiments, when candidate positions of the first time domain duration are overlapped with positions of two target time domain durations, target positions of the first time domain duration are the candidate positions of the first time domain duration; or

when the candidate positions of the first time domain duration are overlapped with the positions of the two target time domain durations, the target positions of the first time domain duration include only time domain duration positions where the candidate positions of the first time domain duration are overlapped with positions of a third target time domain duration of the two target time domain durations; or
when the candidate positions of the first time domain duration are overlapped with the positions of the two target time domain durations, the target positions of the first time domain duration include: the time domain duration positions where the candidate positions of the first time domain duration are overlapped with the positions of the third target time domain duration of the two target time domain durations, and fourth time domain duration positions in the third target time domain duration, herein the fourth time domain duration positions are obtained by translating, time domain duration positions where the candidate positions of the first time domain duration are overlapped with positions of a fourth target time domain duration of the two target time domain durations, into the positions of the third target time domain duration; and
the candidate positions of the first time domain duration are determined according to positions of the second time domain duration.

In some embodiments, a start position of the fourth time domain duration positions is aligned with a start position of the positions of the third target time domain duration.

In some embodiments, the positions of the third target time domain duration are positions of first one of the two target time domain durations; and/or
the positions of the fourth target time domain duration are positions of second one of the two target time domain durations.

In some embodiments, the TypeO-PDCCH CSS set is associated with a first synchronization signal block (SSB), and the first SSB is determined by the terminal device or indicated by a network device.

In some embodiments, the method 300 further include:

the network device transmits first indication information to a terminal device, and the first indication information is used for indicating at least one of:
the first time domain duration, the second time domain duration, a first offset or a second offset;
the first offset is an offset of a start position of the first time domain duration relative to a position of the second time domain duration; and
the second offset is an offset of an end position of the first time domain duration relative to the position of the second time domain duration.

In some embodiments, the method 300 further include:
when a target SSB is changed from the first SSB to a second SSB, the network device updates positions of the first time domain duration and/or positions of the second time domain duration according to the second SSB.

In some embodiments, the terminal device updates the positions of the first time domain duration and/or the positions of the second time domain duration according to the second SSB includes:

the positions of the second time domain duration are updated according to positions of the TypeO-PDCCH CSS set associated with the second SSB; and
the positions of the first time domain duration are updated according to updated positions of the second time domain duration.

In some embodiments, the positions of the first time domain duration are updated according to the updated positions of the second time domain duration includes:

the positions of the first time domain duration in positions of each target time domain duration are updated according to the updated positions of the second time domain duration; or
the positions of the first time domain duration that are overlapped with the updated second time domain duration are updated according to the updated positions of the second time domain duration.

In some embodiments, when updated candidate positions of the first time domain duration are overlapped with positions of two target time domain durations, updated target positions of the first time domain duration are candidate positions of the first time domain duration; or

when the updated candidate positions of the first time domain duration are overlapped with the positions of the two target time domain durations, the updated target positions of the first time domain duration include only time domain duration positions where the candidate positions of the first time domain duration are overlapped with positions of a fifth target time domain duration of the two target time domain durations; or
when the updated candidate positions of the first time domain duration are overlapped with the positions of the two target time domain durations, the updated target positions of the first time domain duration include: the time domain duration positions where the candidate positions of the first time domain duration are overlapped with the positions of the fifth target time domain duration of the two target time domain durations, and fifth time domain duration positions in the positions of the fifth target time domain duration, herein the fifth time domain duration positions are obtained by translating, time domain duration positions where the candidate positions of the first time domain duration are overlapped with positions of a sixth target time domain duration of the two target time domain durations, into the positions of the fifth target time domain duration; and
the updated candidate positions of the first time domain duration are determined according to the updated positions of the second time domain duration.

In some embodiments, a start position of the fifth time domain duration positions is aligned with a start position of the positions of the fifth target time domain duration.
In some embodiments, the positions of the fifth target time domain duration are positions of first one of the two target time domain durations; and/or
the positions of the sixth target time domain duration are positions of second one of the two target time domain durations.
In some embodiments, a relative position of an updated first target search space set in updated target positions of the first time domain duration is unchanged from a relative position of a first target search space set before being updated in target positions, before being updated, of the first time domain duration; and/or

a relative position of an updated second target search space set in updated target positions of the second time domain duration is unchanged from a relative position of a second target search space set before being updated in target positions, before being updated, of the second time domain duration;
the first target search space set belongs to the first search space set group, and the second target search space set belongs to the second search space set group.

In some embodiments, the method 300 further include:
when a target SSB is changed from the first SSB to the second SSB, transmitting, by the network device, second indication information to the terminal device, and the second indication information is used for indicating at least one of:

an updated first time domain duration, an updated second time domain duration, an updated first offset, or an updated second offset;
the updated first offset is an offset of a start position of the updated first time domain duration relative to a position of the updated second time domain duration; and
the updated second offset is an offset of an end position of the updated first time domain duration relative to the position of the updated second time domain duration.

In some embodiments, the target time domain duration includes X consecutive slots, where X is a positive integer.
The method embodiments of the present disclosure have been described in detail above with reference to FIGS. 5 to 10, and the apparatus embodiments of the present disclosure will be described in detail below with reference to FIGS. 11 to 12, it is to be noted that the apparatus embodiments and the method embodiments correspond to each other, and similar descriptions may refer to the method embodiments.

FIG. 11 shows a schematic block diagram of a terminal device 400 according to an embodiment of the present disclosure. As shown in FIG. 11, the terminal device 400 includes a processing unit 410.

The processing unit 410 is configured to determine a first time domain duration and/or a second time domain duration, and the first time domain duration corresponds to a maximum time domain duration of a first search space set group on a target time domain duration, and the second time domain duration corresponds to a maximum time domain duration of a second search space set group on the target time domain duration.

In some embodiments, the first search space set group includes at least one of:

type1 physical downlink control channel common search space (Type1-PDCCH CSS) set, type3 physical downlink control channel common search space (Type3-PDCCH CSS) set or UE-specific search space (USS) set configured by dedicated signaling.

In some embodiments, the second search space set group includes at least one of:

Typel-PDCCH CSS set, type0 physical downlink control channel common search space (Type0-PDCCH CSS) set, type0A physical downlink control channel common search space (Type0A-PDCCH CSS) set or type2 physical downlink control channel common search space (Type2-PDCCH CSS) set configured by non-dedicated signaling.

In some embodiments, the first time domain duration is overlapped with the second time domain duration in time domain.

In some embodiments, the first time domain duration includes Y1 consecutive slots, where Y1 is a positive integer; and/or

the second time domain duration includes Y2 consecutive slots, where Y2 is a positive integer.

In some embodiments, the second time domain duration includes one slot; or the second time domain duration includes two slots.

In some embodiments, target position(s) of the second time domain duration are determined according to positions of a TypeO-PDCCH CSS set corresponding to the second time domain duration in the second search space set group.

In some embodiments, a start position of the second time domain duration is determined according to a start position of the TypeO-PDCCH CSS set.

In some embodiments, when candidate positions of the second time domain duration are not overlapped with positions of two target time domain durations, a start position of the second time domain duration is determined according to a start position of the TypeO-PDCCH CSS set, and the candidate positions of the second time domain duration are determined according to the start position of the TypeO-PDCCH CSS set and the second time domain duration.

In some embodiments, when candidate positions of the second time domain duration are overlapped with positions of two target time domain durations, the target positions of the second time domain duration include time domain duration positions where the candidate positions of the second time domain duration are overlapped with the positions of the two target time domain durations, and the candidate positions of the second time domain duration are determined according to a start position of the TypeO-PDCCH CSS set and the second time domain duration.

In some embodiments, when candidate positions of the second time domain duration are overlapped with positions of two target time domain durations, the target positions of the second time domain duration include only time domain duration positions where the candidate positions of the second time domain duration are overlapped with positions of a first target time domain duration of the two target time domain durations, and the candidate positions of the second time domain duration are determined according to a start position of the TypeO-PDCCH CSS set and the second time domain duration.

In some embodiments, when candidate positions of the second time domain duration are overlapped with positions of two target time domain durations, the target positions of the second time domain duration include: time domain duration positions where the candidate positions of the second time domain duration are overlapped with positions of a first target time domain duration of the two target time domain durations, and third time domain duration positions in the positions of the first target time domain duration;

the third time domain duration positions are obtained by translating time domain duration positions where the candidate positions of the second time domain duration are overlapped with positions of a second target time domain duration of the two target time domain durations into the positions of the first target time domain duration; and the candidate positions of the second time domain duration are determined according to a start position of the TypeO-PDCCH CSS set and the second time domain duration.

In some embodiments, a start position of the third time domain duration positions is aligned with a start position of the positions of the first target time domain duration.

In some embodiments, the positions of the first target time domain duration are positions of first one of the two target time domain durations; and/or the positions of the second target time domain duration are positions of second one of the two target time domain durations.

In some embodiments, an end position of the second time domain duration is determined according to a start position of the TypeO-PDCCH CSS set; or the end position of the second time domain duration is determined according to an end position of the TypeO-PDCCH CSS set.

In some embodiments, it is not expected that positions of the second time domain duration configured for the terminal device are overlapped with positions of two target time domain durations.

In some embodiments, positions of the first time domain duration are determined according to positions of the second time domain duration.

In some embodiments, a start position of the first time domain duration is determined according to a start position of the second time domain duration; or

the start position of the first time domain duration is determined according to an end position of the second time domain duration.

In some embodiments, the start position of the first time domain duration has a first offset relative to the start position of the second time domain duration; or the start position of the first time domain duration has the first offset relative to the end position of the second time domain duration; or the start position of the second time domain duration has the first offset relative to the start position of the first time domain duration; or the end position of the second time domain duration has the first offset relative to the start position of the first time domain duration.

In some embodiments, an end position of the first time domain duration is determined according to a start position of the second time domain duration; or

the end position of the first time domain duration is determined according to an end position of the second time domain duration.

In some embodiments, an end position of the first time domain duration has a second offset relative to the start position of the second time domain duration; or the end position of the first time domain duration has the second offset relative to the end position of the second time domain duration; or the start position of the second time domain duration has the second offset relative to the end position of the first time domain duration; or the end position of the second time domain duration has the second offset relative to the end position of the first time domain duration.

In some embodiments, when candidate positions of the first time domain duration are overlapped with positions of two target time domain durations, target positions of the first time domain duration are the candidate positions of the first time domain duration; or

when the candidate positions of the first time domain duration are overlapped with the positions of the two target time domain durations, the target positions of the first time domain duration include only time domain duration positions where the candidate positions of the first time domain duration are overlapped with positions of a third target time domain duration of the two target time domain durations; or

when the candidate positions of the first time domain duration are overlapped with the positions of the two target time domain durations, the target positions of the first time domain duration include: the time domain duration positions where the candidate positions of the first time domain duration are overlapped with the positions of the third target time domain duration of the two target time domain durations, and fourth time domain duration positions in the third target time domain duration, herein the fourth time domain duration positions are obtained by translating, time domain duration positions where the candidate positions of the first time domain duration are overlapped with positions of a fourth target time domain duration of the two target time domain durations, into the positions of the third target time domain duration; and

the candidate positions of the first time domain duration are determined according to positions of the second time domain duration.

In some embodiments, a start position of the fourth time domain duration positions is aligned with a start position of the positions of the third target time domain duration.

In some embodiments, the positions of the third target time domain duration are positions of first one of the two target time domain durations; and/or the positions of the fourth target time domain duration are positions of second one of the two target time domain durations.

In some embodiments, the terminal device further includes a communication unit.

The communication unit is used for receiving first indication information of the network device, and the first indication information is used for indicating at least one of:

the first time domain duration, the second time domain duration, a first offset or a second offset;

the first offset is an offset of a start position of the first time domain duration relative to a position of the second time domain duration; and

the second offset is an offset of an end position of the first time domain duration relative to the position of the second time domain duration.

In some embodiments, target positions of the second time domain duration are determined according to positions of TypeO-PDCCH CSS set, the TypeO-PDCCH CSS set is associated with a first synchronization signal block (SSB), and the first SSB is determined by the terminal device or indicated by a network device.

In some embodiments, the processing unit 410 is further configured to:

when a target SSB is changed from the first SSB to a second SSB, update positions of the first time domain duration and/or positions of the second time domain duration according to the second SSB.

In some embodiments, the processing unit 410 is further configured to:

update the positions of the second time domain duration according to positions of the TypeO-PDCCH CSS set associated with the second SSB; and
update the positions of the first time domain duration according to the updated positions of the second time domain duration.

In some embodiments, the processing unit 410 is further configured to:

update the positions of the first time domain duration in positions of each target time domain duration according to the updated positions of the second time domain duration; or
merely update the positions of the first time domain duration that are overlapped with the updated second time domain duration according to the updated positions of the second time domain duration.

In some embodiments, when updated candidate positions of the first time domain duration are overlapped with positions of two target time domain durations, updated target positions of the first time domain duration are candidate positions of the first time domain duration; or

when the updated candidate positions of the first time domain duration are overlapped with the positions of the two target time domain durations, the updated target positions of the first time domain duration include only time domain duration positions where the candidate positions of the first time domain duration are overlapped with positions of a fifth target time domain duration of the two target time domain durations; or
when the updated candidate positions of the first time domain duration are overlapped with the positions of the two target time domain durations, the updated target positions of the first time domain duration include: the time domain duration positions where the candidate positions of the first time domain duration are overlapped with the positions of the fifth target time domain duration of the two target time domain durations, and fifth time domain duration positions in the positions of the fifth target time domain duration, herein the fifth time domain duration positions are obtained by translating, time domain duration positions where the candidate positions of the first time domain duration are overlapped with positions of a sixth target time domain duration of the two target time domain durations, into the positions of the fifth target time domain duration; and
the updated candidate positions of the first time domain duration are determined according to the updated positions of the second time domain duration.

In some embodiments, a start position of the fifth time domain duration positions is aligned with a start position of the positions of the fifth target time domain duration.

In some embodiments, the positions of the fifth target time domain duration are positions of first one of the two target time domain durations; and/or the positions of the sixth target time domain duration are positions of second one of the two target time domain durations.

In some embodiments, a relative position of an updated first target search space set in updated target positions of the first time domain duration is unchanged from a relative position of a first target search space set before being updated in target positions, before being updated, of the first time domain duration; and/or

a relative position of an updated second target search space set in updated target positions of the second time domain duration is unchanged from a relative position of a second target search space set before being updated in target positions, before being updated, of the second time domain duration;
the first target search space set belongs to the first search space set group, and the second target search space set belongs to the second search space set group.

In some embodiments, the terminal device further includes a communication unit.

The communication unit is used for when a target SSB is changed from the first SSB to the second SSB, receiving second indication information of the network device, and the second indication information is used for indicating at least one of:

an updated first time domain duration, an updated second time domain duration, an updated first offset, or an updated second offset;

the updated first offset is an offset of a start position of the updated first time domain duration relative to a position of the updated second time domain duration; and

the updated second offset is an offset of an end position of the updated first time domain duration relative to the position of the updated second time domain duration.

In some embodiments, the target time domain duration includes X consecutive slots, where X is a positive integer.

In some embodiments, the above communication unit may be a communication interface or a transceiver, or an input-output interface of a communication chip or a system-on-chip. The above processing unit may be one or more processors.

It is to be noted that the terminal device 400 according to the embodiment of the present disclosure may correspond to the terminal device in the method embodiment of the present disclosure, and the above and other operations and/or functions of the individual units in the terminal device 400 are to respectively implement the corresponding flows of the terminal device in the method 200 shown in FIG. 5, which are not repeated herein for sake of brevity.

FIG. 12 shows a schematic block diagram of a network device 500 according to an embodiment of the present disclosure. As shown in FIG. 12, the network device 500 includes a processing unit 410.

The processing unit 410 is configured to determine a first time domain duration and/or a second time domain duration, and the first time domain duration corresponds to a maximum time domain duration of a first search space set group on a target time domain duration, and the second time domain duration corresponds to a maximum time domain duration of a second search space set group on the target time domain duration.

In some embodiments, the first search space set group includes at least one of:

typel physical downlink control channel common search space (Type1-PDCCH CSS) set, type3 physical downlink control channel common search space (Type3-PDCCH CSS) set or UE-specific search space (USS) set configured by dedicated signaling.

In some embodiments, the second search space set group includes at least one of:

Typel-PDCCH CSS set, type0 physical downlink control channel common search space (Type0-PDCCH CSS) set, typeOA physical downlink control channel common search space (Type0A-PDCCH CSS) set or type2 physical downlink control channel common search space (Type2-PDCCH CSS) set configured by non-dedicated signaling.

In some embodiments, the first time domain duration is overlapped with the second time domain duration in time domain.

In some embodiments, the first time domain duration includes Y1 consecutive slots, where Y1 is a positive integer; and/or

the second time domain duration includes Y2 consecutive slots, where Y2 is a positive integer.

In some embodiments, the second time domain duration includes one slot; or the second time domain duration includes two slots.

In some embodiments, target position(s) of the second time domain duration are determined according to positions of a TypeO-PDCCH CSS set corresponding to the second time domain duration in the second search space set group.

In some embodiments, a start position of the second time domain duration is determined according to a start position of the TypeO-PDCCH CSS set.

In some embodiments, when candidate positions of the second time domain duration are not overlapped with positions of two target time domain durations, a start position of the second time domain duration is determined according to a start position of the TypeO-PDCCH CSS set, and the candidate positions of the second time domain duration are determined according to the start position of the TypeO-PDCCH CSS set and the second time domain duration.

In some embodiments, when candidate positions of the second time domain duration are overlapped with positions of two target time domain durations, the target positions of the second time domain duration include time domain duration positions where the candidate positions of the second time domain duration are overlapped with the positions of the two target time domain durations, and the candidate positions of the second time domain duration are determined according to a start position of the TypeO-PDCCH CSS set and the second time domain duration.

In some embodiments, when candidate positions of the second time domain duration are overlapped with positions of two target time domain durations, the target positions of the second time domain duration include only time domain duration positions where the candidate positions of the second time domain duration are overlapped with positions of a first target time domain duration of the two target time domain durations, and the candidate positions of the second time domain duration are determined according to a start position of the TypeO-PDCCH CSS set and the second time domain duration.

In some embodiments, when candidate positions of the second time domain duration are overlapped with positions of two target time domain durations, the target positions of the second time domain duration include: time domain duration positions where the candidate positions of the second time domain duration are overlapped with positions of a first target time domain duration of the two target time domain durations, and third time domain duration positions in the positions of the first target time domain duration;

the third time domain duration positions are obtained by translating time domain duration positions where the candidate positions of the second time domain duration are overlapped with positions of a second target time domain duration of the two target time domain durations into the positions of the first target time domain duration; and the candidate positions of the second time domain duration are determined according to a start position of the TypeO-PDCCH CSS set and the second time domain duration.

In some embodiments, a start position of the third time domain duration positions is aligned with a start position of the positions of the first target time domain duration.

In some embodiments, the positions of the first target time domain duration are positions of first one of the two target time domain durations; and/or the positions of the second target time domain duration are positions of second one of the two target time domain durations.

In some embodiments, an end position of the second time domain duration is determined according to a start position of the TypeO-PDCCH CSS set; or the end position of the second time domain duration is determined according to an end position of the TypeO-PDCCH CSS set.

In some embodiments, positions of the first time domain duration are determined according to positions of the second time domain duration.

In some embodiments, a start position of the first time domain duration is determined according to a start position of the second time domain duration; or

the start position of the first time domain duration is determined according to an end position of the second time domain duration.

In some embodiments, the start position of the first time domain duration has a first offset relative to the start position of the second time domain duration; or the start position of the first time domain duration has the first offset relative to the end position of the second time domain duration; or the start position of the second time domain duration has the first offset relative to the start position of the first time domain duration; or the end position of the second time domain duration has the first offset relative to the start position of the first time domain duration.

In some embodiments, an end position of the first time domain duration is determined according to a start position of the second time domain duration; or

the end position of the first time domain duration is determined according to an end position of the second time domain duration.

In some embodiments, an end position of the first time domain duration has a second offset relative to the start position of the second time domain duration; or the end position of the first time domain duration has the second offset relative to the end position of the second time domain duration; or the start position of the second time domain duration has the second offset relative to the end position of the first time domain duration; or the end position of the second time domain duration has the second offset relative to the end position of the first time domain duration.

In some embodiments, when candidate positions of the first time domain duration are overlapped with positions of two target time domain durations, target positions of the first time domain duration are the candidate positions of the first time domain duration; or

when the candidate positions of the first time domain duration are overlapped with the positions of the two target time domain durations, the target positions of the first time domain duration include only time domain duration positions where the candidate positions of the first time domain duration are overlapped with positions of a third target time domain duration of the two target time domain durations; or

when the candidate positions of the first time domain duration are overlapped with the positions of the two target time domain durations, the target positions of the first time domain duration include: the time domain duration positions where the candidate positions of the first time domain duration are overlapped with the positions of the third target time domain duration of the two target time domain durations, and fourth time domain duration positions in the third target time domain duration, herein the fourth time domain duration positions are obtained by translating, time domain duration positions where the candidate positions of the first time domain duration are overlapped with positions of a fourth target time domain duration of the two target time domain durations, into the positions of the third target time domain duration; and

the candidate positions of the first time domain duration are determined according to positions of the second time domain duration.

In some embodiments, a start position of the fourth time domain duration positions is aligned with a start position of the positions of the third target time domain duration.

In some embodiments, the positions of the third target time domain duration are positions of first one of the two target time domain durations; and/or the positions of the fourth target time domain duration are positions of second one of the two target time domain durations.

In some embodiments, the network device further includes a communication unit.

The communication unit is used for receiving first indication information of the network device, and the first indication information is used for indicating at least one of:

the first time domain duration, the second time domain duration, a first offset or a second offset;
the first offset is an offset of a start position of the first time domain duration relative to a position of the second time domain duration; and
the second offset is an offset of an end position of the first time domain duration relative to the position of the second time domain duration.

In some embodiments, target positions of the second time domain duration are determined according to positions of TypeO-PDCCH CSS set, the TypeO-PDCCH CSS set is associated with a first synchronization signal block (SSB), and the first SSB is determined by the terminal device or indicated by a network device.

In some embodiments, the processing unit 410 is further configured to:
when a target SSB is changed from the first SSB to a second SSB, update positions of the first time domain duration and/or positions of the second time domain duration according to the second SSB.

In some embodiments, the processing unit 410 is further configured to:

update the positions of the second time domain duration according to positions of the TypeO-PDCCH CSS set associated with the second SSB; and
update the positions of the first time domain duration according to the updated positions of the second time domain duration.

In some embodiments, the processing unit 410 is further configured to:

update the positions of the first time domain duration in positions of each target time domain duration according to the updated positions of the second time domain duration; or
merely update the positions of the first time domain duration that are overlapped with the updated second time domain duration according to the updated positions of the second time domain duration.

In some embodiments, when updated candidate positions of the first time domain duration are overlapped with positions of two target time domain durations, updated target positions of the first time domain duration are candidate positions of the first time domain duration; or

when the updated candidate positions of the first time domain duration are overlapped with the positions of the two target time domain durations, the updated target positions of the first time domain duration include only time domain duration positions where the candidate positions of the first time domain duration are overlapped with positions of a fifth target time domain duration of the two target time domain durations; or
when the updated candidate positions of the first time domain duration are overlapped with the positions of the two target time domain durations, the updated target positions of the first time domain duration include: the time domain duration positions where the candidate positions of the first time domain duration are overlapped with the positions of the fifth target time domain duration of the two target time domain durations, and fifth time domain duration positions in the positions of the fifth target time domain duration, herein the fifth time domain duration positions are obtained by translating, time domain duration positions where the candidate positions of the first time domain duration are overlapped with positions of a sixth target time domain duration of the two target time domain durations, into the positions of the fifth target time domain duration; and
the updated candidate positions of the first time domain duration are determined according to the updated positions of the second time domain duration.

In some embodiments, a start position of the fifth time domain duration positions is aligned with a start position of the positions of the fifth target time domain duration.

In some embodiments, the positions of the fifth target time domain duration are positions of first one of the two target time domain durations; and/or the positions of the sixth target time domain duration are positions of second one of the two target time domain durations.

In some embodiments, a relative position of an updated first target search space set in updated target positions of the first time domain duration is unchanged from a relative position of a first target search space set before being updated in target positions, before being updated, of the first time domain duration; and/or

a relative position of an updated second target search space set in updated target positions of the second time domain duration is unchanged from a relative position of a second target search space set before being updated in target positions, before being updated, of the second time domain duration; the first target search space set belongs to the first search space set group, and the second target search space set belongs to the second search space set group.

In some embodiments, the network device further includes a communication unit.

The communication unit is used for when a target SSB is changed from the first SSB to the second SSB, transmitting second indication information to a terminal device, and the second indication information is used for indicating at least one of:

an updated first time domain duration, an updated second time domain duration, an updated first offset, or an updated second offset; the updated first offset is an offset of a start position of the updated first time domain duration relative to a position of the updated second time domain duration; and the updated second offset is an offset of an end position of the updated first time domain duration relative to the position of the updated second time domain duration.

In some embodiments, the target time domain duration includes X consecutive slots, where X is a positive integer.

In some embodiments, the above communication unit may be a communication interface or a transceiver, or an input-output interface of a communication chip or a system-on-chip. The above processing unit may be one or more processors.

It is to be noted that the network device 500 according to the embodiment of the present disclosure may correspond to the terminal device in the method embodiment of the present disclosure, and the above and other operations and/or functions of the individual units in the network device 500 are to respectively implement the corresponding flows of the terminal device in the method 300 shown in FIG. 10, which are not repeated herein for sake of brevity.

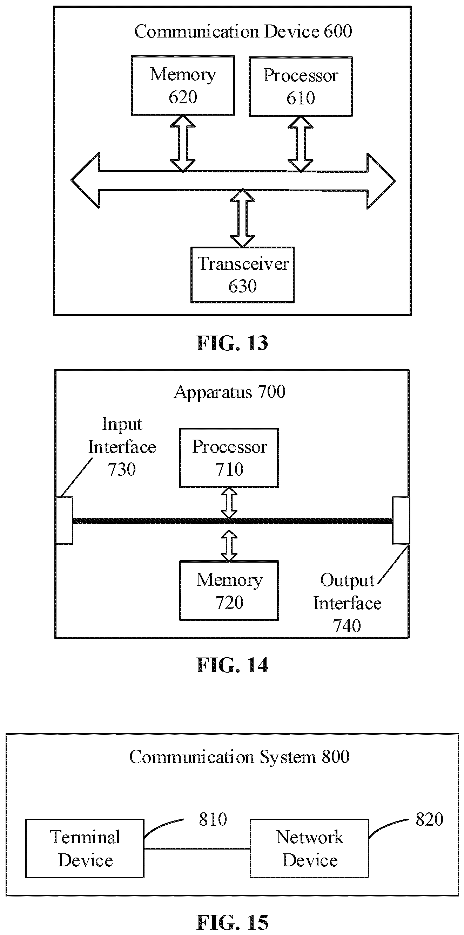

FIG. 13 is a schematic block diagram of a communication device 600 according to an embodiment of the present disclosure. The communication device 600 shown in FIG. 13 includes a processor 610, and the processor 610 can invoke and run a computer program from a memory to implement the method in the embodiments of the present disclosure.

In some embodiments, as shown in FIG. 13, the communication device 600 may further include a memory 620. The processor 610 may invoke and run a computer program from the memory 620 to implement the method in the embodiments of the present disclosure.

The memory 620 may be a separate device independent of the processor 610 or may be integrated into the processor 610.

In some embodiments, as shown in FIG. 13, the communication device 600 may further include a transceiver 630. The processor 610 may control the transceiver 630 to communicate with other devices. Specifically, the transceiver 630 may transmit information or data to other devices or receive information or data transmitted by other devices.

The transceiver 630 may include a transmitter and a receiver. The transceiver 630 may further include antennas, and the number of the antennas may be one or more.

In some embodiments, the communication device 600 may be the network device of the embodiments of the present disclosure, and the communication device 600 may implement corresponding processes implemented by the network device in the various methods according to the embodiments of the present disclosure, which is not described repeatedly for the sake of simplicity.

In some embodiments, the communication device 600 may be the terminal device of the embodiments of the present disclosure, and the communication device 600 may implement corresponding processes implemented by the terminal device in the various methods according to the embodiments of the present disclosure, which is not described repeatedly for sake of brevity.

FIG. 14 is a schematic structural diagram of an apparatus according to an embodiment of the present disclosure. The apparatus 700 shown in FIG. 14 includes a processor 710. The processor 710 may invoke and run computer programs from a memory to implement the method in the embodiments of the present disclosure.

In some embodiments, as shown in FIG. 14, the apparatus 700 may further include a memory 720. The processor 710 may invoke and run the computer program from the memory 720 to implement the method in the embodiments of the present disclosure.

The memory 720 may be a separate device independent of the processor 710 or may be integrated into the processor 710.

In some embodiments, the apparatus 700 may further include an input interface 730. The processor 710 may control the input interface 730 to communicate with other devices or chips, and in particular to obtain information or data sent by other devices or chips.

In some embodiments, the apparatus 700 may further include an output interface 740. The processor 710 may control the output interface 740 to communicate with other devices or chips, and in particular to output information or data to other devices or chips.

In some embodiments, the apparatus may be applied to the network device in the embodiments of the present disclosure, and the apparatus may implement the corresponding processes implemented by the network device in various methods according to the embodiments of the present disclosure, which is not described repeatedly for sake of brevity.

In some embodiments, the apparatus may be applied to the terminal device in the embodiments of the present disclosure, and the apparatus may implement the corresponding processes implemented by the terminal device in various methods according to the embodiments of the present disclosure, which is not described repeatedly for sake of brevity.

In some embodiments, the apparatus mentioned in the embodiments of the present disclosure may be a chip, such as a system level chip, a system chip, a chip system or an on-chip system chip, etc.

FIG. 15 is a schematic block diagram of a communication system 800 provided according to an embodiment of the present disclosure. As shown in FIG. 15, the communication system 800 includes a terminal device 810 and a network device 820.

The terminal device 810 may be used to implement corresponding functions implemented by the terminal device in the above methods, and the network device 820 may be used to implement corresponding functions implemented by the network device in the above methods. For the sake of brevity, it will not be elaborated herein.

It is to be understood that the processor in the embodiments of the present disclosure may be an integrated circuit chip with signal processing capability. In the implementation process, various operations in the above method embodiment can be implemented by an integrated logic circuit of hardware in the processor or instructions in the form of software. The above processor can be a general purpose processor, a digital signal processor (DSPS), an application specific integrated circuit (ASIC), a field programmable gate array (FPGA) or other programmable logic devices, discrete gates or transistor logic devices, and discrete hardware components. Various methods, operations and logic block diagrams disclosed in the embodiments of the present disclosure can be implemented or executed. The general-purpose processor may be a microprocessor or the processor may be any conventional processor or the like. The operations of the methods disclosed in connection with the embodiments of the present disclosure can be directly embodied as being implemented by a hardware decoding processor, or by a combination of the hardware and software modules in the decoding processor. The software module can be located in a random memory, a flash memory, a read-only memory, a programmable read-only memory or an electrically erasable programmable memory, a register and other mature storage media in the art. The storage medium is located in the memory, and the processor reads information in the memory and implements the operations of the above methods in combination with its hardware.

It is to be understood that the memory in the embodiments of the present disclosure may be a volatile memory or a non-volatile memory, or may include both a volatile and a non-volatile memory. The nonvolatile memory can be a read-only memory (ROM), a programmable ROM (PROM), an erasable PROM (EPROM), an electrically EPROM (EEPROM) or a flash memory. The Volatile memory can be a random access memory (RAM), which is used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the systems and methods described herein is intended to include, but is not limited to, memories of these and any other suitable type.

It is to be understood that the above memory is exemplarily but unlimitedly described. For example, the memory in the embodiments of the disclosure may also be an SRAM, a DRAM, an SDRAM, a DDR SDRAM, an ESDRAM, an SLDRAM, a DR RAM, etc. That is, the memory in the embodiments of the disclosure is intended to include but not limited to memories of these and any other suitable type.

The embodiments of the disclosure also provide a computer-readable storage medium for storing computer programs.

In some embodiments, the computer-readable storage medium may be applied to the network device of the embodiments of the disclosure. The computer programs may enable a computer to perform the corresponding processes implemented by the network device in various methods of the embodiments of the disclosure, which will not be elaborated herein for brief description.

In some embodiments, the computer-readable storage medium may be applied to the terminal device of the embodiments of the disclosure. The computer programs may enable a computer to perform the corresponding processes implemented by the terminal device in various methods of the embodiments of the disclosure, which will not be elaborated herein for brief description.

The embodiments of the disclosure also provide a computer program product. The computer program product includes computer program instructions.

In some embodiments, the computer program product may be applied to the network device of the embodiments of the disclosure. The computer program instructions may enable a computer to perform the corresponding processes implemented by the network device in various methods of the embodiments of the disclosure, which will not be elaborated herein for brief description.

In some embodiments, the computer program product may be applied to the terminal device of the embodiments of the disclosure. The computer program instructions may enable a computer to perform the corresponding processes implemented by the terminal device in various methods of the embodiments of the disclosure, which will not be elaborated herein for brief description.

The embodiments of the disclosure also provide a computer program.

In some embodiments, the computer program may be applied to the network device of the embodiments of the disclosure. The computer program, when executed by a computer, enables the computer to perform the corresponding processes implemented by the network device in various methods of the embodiments of the disclosure, which will not be elaborated herein for brief description.

In some embodiments, the computer program may be applied to the terminal device of the embodiments of the disclosure. The computer program, when executed by a computer, enables the computer to perform the corresponding processes implemented by the terminal device in various methods of the embodiments of the disclosure, which will not be elaborated herein for brief description.

Those of ordinary skill in the art may realize that the units and algorithm operations of various examples described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiments and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between various displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, various functional units in various embodiments of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the operations of the methods in various embodiments of the disclosure. The abovementioned storage medium includes: various media capable of storing program codes such as a U disk, a mobile hard disk, a ROM, a RAM, a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

**Claims**

1. A method for wireless communication, comprising:
   determining, by a terminal device, a first time domain duration and/or a second time domain duration, wherein the first time domain duration corresponds to a maximum time domain duration of a first search space set group on a target time domain duration, and the second time domain duration corresponds to a maximum time domain duration of a second search space set group on the target time domain duration.

2. The method of claim 1, wherein the first search space set group comprises at least one of:
   type1 physical downlink control channel common search space (Type1-PDCCH CSS) set, type3 physical downlink control channel common search space (Type3-PDCCH CSS) set or UE-specific search space (USS) set configured by dedicated signaling.

3. The method of claim 1 or 2, wherein the second search space set group comprises at least one of:
   Type1-PDCCH CSS set, type0 physical downlink control channel common search space (Type0-PDCCH CSS) set, typeOA physical downlink control channel common search space (Type0A-PDCCH CSS) set or type2 physical downlink control channel common search space (Type2-PDCCH CSS) set configured by non-dedicated signaling.

4. The method of any one of claims 1 to 3, wherein the first time domain duration is overlapped with the second time domain duration in time domain.

5. The method of any one of claims 1 to 4, wherein the first time domain duration comprises Y1 consecutive slots, where Y1 is a positive integer; and/or
   the second time domain duration comprises Y2 consecutive slots, where Y2 is a positive integer.

6. The method of any one of claims 1 to 5, wherein the second time domain duration comprises one slot; or the second time domain duration comprises two slots.

7. The method of any one of claims 1 to 6, wherein target position(s) of the second time domain duration are determined according to positions of a TypeO-PDCCH CSS set corresponding to the second time domain duration in the second search space set group.

8. The method of claim 7, wherein a start position of the second time domain duration is determined according to a start position of the TypeO-PDCCH CSS set.

9. The method of claim 7, wherein when candidate positions of the second time domain duration are not overlapped with positions of two target time domain durations, a start position of the second time domain duration is determined according to a start position of the TypeO-PDCCH CSS set, wherein the candidate positions of the second time domain duration are determined according to the start position of the TypeO-PDCCH CSS set and the second time domain duration.

10. The method of any one of claims 7 to 9, wherein when candidate positions of the second time domain duration are overlapped with positions of two target time domain durations, the target positions of the second time domain duration comprise time domain duration positions where the candidate positions of the second time domain duration are overlapped with the positions of the two target time domain durations, wherein the candidate positions of the second time domain duration are determined according to a start position of the TypeO-PDCCH CSS set and the second time domain duration.

11. The method of any one of claims 7 to 9, wherein when candidate positions of the second time domain duration are overlapped with positions of two target time domain durations, the target positions of the second time domain duration comprise only time domain duration positions where the candidate positions of the second time domain duration are overlapped with positions of a first target time domain duration of the two target time domain durations, wherein the candidate positions of the second time domain duration are determined according to a start position of the TypeO-PDCCH CSS set and the second time domain duration.

12. The method of any one of claims 7 to 9, wherein when candidate positions of the second time domain duration are overlapped with positions of two target time domain durations, the target positions of the second time domain duration comprise: time domain duration positions where the candidate positions of the second time domain duration are overlapped with positions of a first target time domain duration of the two target time domain durations, and third time domain duration positions in the positions of the first target time domain duration,

wherein the third time domain duration positions are obtained by translating, time domain duration positions where the candidate positions of the second time domain duration are overlapped with positions of a second target time domain duration of the two target time domain durations, into the positions of the first target time domain duration; and

the candidate positions of the second time domain duration are determined according to a start position of the TypeO-PDCCH CSS set and the second time domain duration.

13. The method of claim 12, wherein a start position of the third time domain duration positions is aligned with a start position of the positions of the first target time domain duration.

14. The method of any one of claims 11 to 13, wherein the positions of the first target time domain duration are positions of first one of the two target time domain durations; and/or
the positions of the second target time domain duration are positions of second one of the two target time domain durations.

15. The method of claim 7, wherein an end position of the second time domain duration is determined according to a start position of the TypeO-PDCCH CSS set; or
the end position of the second time domain duration is determined according to an end position of the TypeO-PDCCH CSS set.

16. The method of claim 7, wherein it is not expected that positions of the second time domain duration configured for the terminal device are overlapped with positions of two target time domain durations.

17. The method of any one of claims 1-16, wherein positions of the first time domain duration are determined according to positions of the second time domain duration.

18. The method of claim 17, wherein a start position of the first time domain duration is determined according to a start position of the second time domain duration; or
the start position of the first time domain duration is determined according to an end position of the second time domain duration.

19. The method of claim 18, wherein

the start position of the first time domain duration has a first offset relative to the start position of the second time domain duration; or
the start position of the first time domain duration has the first offset relative to the end position of the second time domain duration; or
the start position of the second time domain duration has the first offset relative to the start position of the first time domain duration; or
the end position of the second time domain duration has the first offset relative to the start position of the first time domain duration.

20. The method of claim 17, wherein an end position of the first time domain duration is determined according to a start position of the second time domain duration; or
the end position of the first time domain duration is determined according to an end position of the second time domain duration.

21. The method of claim 20, wherein

the end position of the first time domain duration has a second offset relative to the start position of the second time domain duration; or
the end position of the first time domain duration has the second offset relative to the end position of the second time domain duration; or
the start position of the second time domain duration has the second offset relative to the end position of the first time domain duration; or

the end position of the second time domain duration has the second offset relative to the end position of the first time domain duration.

22. The method of any one of claims 17 to 21, wherein

when candidate positions of the first time domain duration are overlapped with positions of two target time domain durations, target positions of the first time domain duration are the candidate positions of the first time domain duration; or

when the candidate positions of the first time domain duration are overlapped with the positions of the two target time domain durations, the target positions of the first time domain duration comprise only time domain duration positions where the candidate positions of the first time domain duration are overlapped with positions of a third target time domain duration of the two target time domain durations; or

when the candidate positions of the first time domain duration are overlapped with the positions of the two target time domain durations, the target positions of the first time domain duration comprise: the time domain duration positions where the candidate positions of the first time domain duration are overlapped with the positions of the third target time domain duration of the two target time domain durations, and fourth time domain duration positions in the third target time domain duration, wherein the fourth time domain duration positions are obtained by translating, time domain duration positions where the candidate positions of the first time domain duration are overlapped with positions of a fourth target time domain duration of the two target time domain durations, into the positions of the third target time domain duration; and

wherein the candidate positions of the first time domain duration are determined according to positions of the second time domain duration.

23. The method of claim 22, wherein a start position of the fourth time domain duration positions is aligned with a start position of the positions of the third target time domain duration.

24. The method of claim 22 or 23, wherein the positions of the third target time domain duration are positions of first one of the two target time domain durations; and/or

the positions of the fourth target time domain duration are positions of second one of the two target time domain durations.

25. The method of any one of claims 1 to 24, further comprising:
receiving, by the terminal device, first indication information from a network device, wherein the first indication information is used for indicating at least one of:

the first time domain duration, the second time domain duration, a first offset or a second offset,

wherein the first offset is an offset of a start position of the first time domain duration relative to a position of the second time domain duration; and

the second offset is an offset of an end position of the first time domain duration relative to the position of the second time domain duration.

26. The method of any one of claims 1 to 25, wherein target positions of the second time domain duration are determined according to positions of TypeO-PDCCH CSS set, the TypeO-PDCCH CSS set is associated with a first synchronization signal block (SSB), and the first SSB is determined by the terminal device or indicated by a network device.

27. The method of claim 26, further comprising:
when a target SSB is changed from the first SSB to a second SSB, updating, by the terminal device, positions of the first time domain duration and/or positions of the second time domain duration according to the second SSB.

28. The method of claim 27, wherein the updating, by the terminal device, the positions of the first time domain duration and/or the positions of the second time domain duration according to the second SSB comprises:

updating the positions of the second time domain duration according to positions of the TypeO-PDCCH CSS set associated with the second SSB; and

updating the positions of the first time domain duration according to updated positions of the second time domain duration.

29. The method of claim 28, wherein the updating the positions of the first time domain duration according to the updated positions of the second time domain duration comprises:

updating the positions of the first time domain duration in positions of each target time domain duration according to the updated positions of the second time domain duration; or

updating the positions of the first time domain duration that are overlapped with the updated second time domain duration according to the updated positions of the second time domain duration.

30. The method of claim 28 or 29, wherein

when updated candidate positions of the first time domain duration are overlapped with positions of two target time domain durations, updated target positions of the first time domain duration are candidate positions of the first time domain duration; or

when the updated candidate positions of the first time domain duration are overlapped with the positions of the two target time domain durations, the updated target positions of the first time domain duration comprise only time domain duration positions where the candidate positions of the first time domain duration are overlapped with positions of a fifth target time domain duration of the two target time domain durations; or

when the updated candidate positions of the first time domain duration are overlapped with the positions of the two target time domain durations, the updated target positions of the first time domain duration comprise: the time domain duration positions where the candidate positions of the first time domain duration are overlapped with the positions of the fifth target time domain duration of the two target time domain durations, and fifth time domain duration positions in the positions of the fifth target time domain duration, wherein the fifth time domain duration positions are obtained by translating, time domain duration positions where the candidate positions of the first time domain duration are overlapped with positions of a sixth target time domain duration of the two target time domain durations, into the positions of the fifth target time domain duration; and

wherein the updated candidate positions of the first time domain duration are determined according to the updated positions of the second time domain duration.

31. The method of claim 30, wherein a start position of the fifth time domain duration positions is aligned with a start position of the positions of the fifth target time domain duration.

32. The method of claim 30 or 31, wherein the positions of the fifth target time domain duration are positions of first one of the two target time domain durations; and/or

the positions of the sixth target time domain duration are positions of second one of the two target time domain durations.

33. The method of any one of claims 27 to 32, wherein

a relative position of an updated first target search space set in updated target positions of the first time domain duration is unchanged from a relative position of a first target search space set before being updated in target positions, before being updated, of the first time domain duration; and/or

a relative position of an updated second target search space set in updated target positions of the second time domain duration is unchanged from a relative position of a second target search space set before being updated in target positions, before being updated, of the second time domain duration,

wherein the first target search space set belongs to the first search space set group, and the second target search space set belongs to the second search space set group.

34. The method of any one of claims 27 to 33, further comprising:

when a target SSB is changed from the first SSB to the second SSB, receiving, by the terminal device, second indication information from the network device, wherein the second indication information is used for indicating at least one of:

an updated first time domain duration, an updated second time domain duration, an updated first offset, or an updated second offset,

wherein the updated first offset is an offset of a start position of the updated first time domain duration relative to a position of the updated second time domain duration; and

the updated second offset is an offset of an end position of the updated first time domain duration relative to the position of the updated second time domain duration.

**35.** The method of any one of claims 1 to 34, wherein the target time domain duration comprises X consecutive slots, where X is a positive integer.

**36.** A method for wireless communication, comprising:

determining, by a network device, a first time domain duration and/or a second time domain duration, wherein the first time domain duration corresponds to a maximum time domain duration of a first search space set group on a target time domain duration, and the second time domain duration corresponds to a maximum time domain duration of a second search space set group on the target time domain duration.

**37.** The method of claim 36, wherein the first search space set group comprises at least one of: type 1 physical downlink control channel common search space (Type1-PDCCH CSS) set, type3 physical downlink control channel common search space (Type3-PDCCH CSS) set or UE-specific search space (USS) set configured by dedicated signaling.

**38.** The method of claim 36 or 37, wherein the second search space set group comprises at least one of: Typel-PDCCH CSS set, type0 physical downlink control channel common search space (Type0-PDCCH CSS) set, typeOA physical downlink control channel common search space (Type0A-PDCCH CSS) set or type2 physical downlink control channel common search space (Type2-PDCCH CSS) set configured by non-dedicated signaling.

**39.** The method of any one of claims 36 to 38, wherein the first time domain duration is overlapped with the second time domain duration in time domain.

**40.** The method of any one of claims 36 to 39, wherein the first time domain duration comprises Y1 consecutive slots, where Y1 is a positive integer; and/or the second time domain duration comprises Y2 consecutive slots, where Y2 is a positive integer.

**41.** The method of any one of claims 36 to 40, wherein the second time domain duration comprises one slot; or the second time domain duration comprises two slots.

**42.** The method of any one of claims 36 to 41, wherein target position(s) of the second time domain duration are determined according to positions of a TypeO-PDCCH CSS set corresponding to the second time domain duration in the second search space set group.

**43.** The method of claim 42, wherein a start position of the second time domain duration is determined according to a start position of the TypeO-PDCCH CSS set.

**44.** The method of claim 43, wherein when candidate positions of the second time domain duration are not overlapped with positions of two target time domain durations, a start position of the second time domain duration is determined according to a start position of the Type0-PDCCH CSS set, wherein the candidate positions of the second time domain duration are determined according to the start position of the TypeO-PDCCH CSS set and the second time domain duration.

**45.** The method of any one of claims 42 to 44, wherein when candidate positions of the second time domain duration are overlapped with positions of two target time domain durations, the target positions of the second time domain duration comprise time domain duration positions where the candidate positions of the second time domain duration are overlapped with the positions of the two target time domain durations, wherein the candidate positions of the second time domain duration are determined according to a start position of the TypeO-PDCCH CSS set and the second time domain duration.

**46.** The method of any one of claims 42 to 44, wherein when candidate positions of the second time domain duration are overlapped with positions of two target time domain durations, the target positions of the second time domain duration comprise only time domain duration positions where the candidate positions of the second time domain duration are overlapped with positions of a first target time domain duration of the two target time domain durations, wherein the candidate positions of the second time domain duration are determined according to a start position of the TypeO-PDCCH CSS set and the second time domain duration.

**47.** The method of any one of claims 42 to 44, wherein when candidate positions of the second time domain duration are overlapped with positions of two target time domain durations, the target positions of the second time domain duration comprise: time domain duration positions where the candidate positions of the second time domain duration are overlapped with positions of a first target time domain duration of the two target time domain durations, and third time domain duration positions in the positions of the first target time domain duration,

wherein the third time domain duration positions are obtained by translating time domain duration positions where the candidate positions of the second time domain duration are overlapped with positions of a second target time domain duration of the two target time domain durations into the positions of the first target time domain duration; and the candidate positions of the second time domain duration are determined according to a start position of the TypeO-PDCCH CSS set and the second time domain duration.

48. The method of claim 47, wherein a start position of the third time domain duration positions is aligned with a start position of the positions of the first target time domain duration.

49. The method of any one of claims 46 to 48, wherein the positions of the first target time domain duration are positions of first one of the two target time domain durations; and/or

the positions of the second target time domain duration are positions of second one of the two target time domain durations.

50. The method of claim 42, wherein an end position of the second time domain duration is determined according to a start position of the TypeO-PDCCH CSS set; or

the end position of the second time domain duration is determined according to an end position of the TypeO-PDCCH CSS set.

51. The method of any one of claims 36-50, wherein positions of the first time domain duration are determined according to positions of the second time domain duration.

52. The method of claim 51, wherein a start position of the first time domain duration is determined according to a start position of the second time domain duration; or

the start position of the first time domain duration is determined according to an end position of the second time domain duration.

53. The method of claim 52, wherein

the start position of the first time domain duration has a first offset relative to the start position of the second time domain duration; or

the start position of the first time domain duration has the first offset relative to the end position of the second time domain duration; or

the start position of the second time domain duration has the first offset relative to the start position of the first time domain duration; or

the end position of the second time domain duration has the first offset relative to the start position of the first time domain duration.

54. The method of claim 53, wherein an end position of the first time domain duration is determined according to a start position of the second time domain duration; or

the end position of the first time domain duration is determined according to an end position of the second time domain duration.

55. The method of claim 54, wherein

the end position of the first time domain duration has a second offset relative to the start position of the second time domain duration; or

the end position of the first time domain duration has the second offset relative to the end position of the second time domain duration; or

the start position of the second time domain duration has the second offset relative to the end position of the first time domain duration; or

the end position of the second time domain duration has the second offset relative to the end position of the first time domain duration.

56. The method of any one of claims 51 to 55, wherein

when candidate positions of the first time domain duration are overlapped with positions of two target time domain durations, target positions of the first time domain duration are the candidate positions of the first time domain duration; or

when the candidate positions of the first time domain duration are overlapped with the positions of the two target time domain durations, the target positions of the first time domain duration comprise only time domain duration positions where the candidate positions of the first time domain duration are overlapped with positions of a third target time domain duration of the two target time domain durations; or

when the candidate positions of the first time domain duration are overlapped with the positions of the two target time domain durations, the target positions of the first time domain duration comprise: the time domain duration positions where the candidate positions of the first time domain duration are overlapped with the positions of the third target time domain duration of the two target time domain durations, and fourth time domain duration positions in the third target time domain duration, wherein the fourth time domain duration positions are obtained by translating, time domain duration positions where the candidate positions of the first time domain duration are overlapped with positions of a fourth target time domain duration of the two target time domain durations, into the positions of the third target time domain duration; and

wherein the candidate positions of the first time domain duration are determined according to positions of the second time domain duration.

57. The method of claim 56, wherein a start position of the fourth time domain duration positions is aligned with a start position of the positions of the third target time domain duration.

58. The method of claim 56 or 57, wherein the positions of the third target time domain duration are positions of first one of the two target time domain durations; and/or

the positions of the fourth target time domain duration are positions of second one of the two target time domain durations.

59. The method of any one of claims 42 to 58, wherein the TypeO-PDCCH CSS set is associated with a first synchronization signal block (SSB), and the first SSB is determined by the terminal device or indicated by a network device.

60. The method of any one of claims 42 to 59, further comprising:
transmitting, by the network device, first indication information to a terminal device, wherein the first indication information is used for indicating at least one of:

the first time domain duration, the second time domain duration, a first offset or a second offset,
wherein the first offset is an offset of a start position of the first time domain duration relative to a position of the second time domain duration; and
the second offset is an offset of an end position of the first time domain duration relative to the position of the second time domain duration.

61. The method of claim 59 or 60, further comprising:
when a target SSB is changed from the first SSB to a second SSB, updating, by the network device, positions of the first time domain duration and/or positions of the second time domain duration according to the second SSB.

62. The method of claim 61, wherein the updating, by the terminal device, the positions of the first time domain duration and/or the positions of the second time domain duration according to the second SSB comprises:

updating the positions of the second time domain duration according to positions of the TypeO-PDCCH CSS set associated with the second SSB; and
updating the positions of the first time domain duration according to updated positions of the second time domain duration.

63. The method of claim 62, wherein the updating the positions of the first time domain duration according to the updated positions of the second time domain duration comprises:

updating the positions of the first time domain duration in positions of each target time domain duration according to the updated positions of the second time domain duration; or
updating the positions of the first time domain duration that are overlapped with the updated second time domain duration according to the updated positions of the second time domain duration.

**64.** The method of claim 28 or 29, wherein

when updated candidate positions of the first time domain duration are overlapped with positions of two target time domain durations, updated target positions of the first time domain duration are candidate positions of the first time domain duration; or

when the updated candidate positions of the first time domain duration are overlapped with the positions of the two target time domain durations, the updated target positions of the first time domain duration comprise only time domain duration positions where the candidate positions of the first time domain duration are overlapped with positions of a fifth target time domain duration of the two target time domain durations; or

when the updated candidate positions of the first time domain duration are overlapped with the positions of the two target time domain durations, the updated target positions of the first time domain duration comprise: the time domain duration positions where the candidate positions of the first time domain duration are overlapped with the positions of the fifth target time domain duration of the two target time domain durations, and fifth time domain duration positions in the positions of the fifth target time domain duration, wherein the fifth time domain duration positions are obtained by translating, time domain duration positions where the candidate positions of the first time domain duration are overlapped with positions of a sixth target time domain duration of the two target time domain durations, into the positions of the fifth target time domain duration; and

wherein the updated candidate positions of the first time domain duration are determined according to the updated positions of the second time domain duration.

**65.** The method of claim 64, wherein a start position of the fifth time domain duration positions is aligned with a start position of the positions of the fifth target time domain duration.

**66.** The method of claim 64 or 65, wherein the positions of the fifth target time domain duration are positions of first one of the two target time domain durations; and/or

the positions of the sixth target time domain duration are positions of second one of the two target time domain durations.

**67.** The method of any one of claims 61 to 66, wherein

a relative position of an updated first target search space set in updated target positions of the first time domain duration is unchanged from a relative position of a first target search space set before being updated in target positions, before being updated, of the first time domain duration; and/or

a relative position of an updated second target search space set in updated target positions of the second time domain duration is unchanged from a relative position of a second target search space set before being updated in target positions, before being updated, of the second time domain duration,

wherein the first target search space set belongs to the first search space set group, and the second target search space set belongs to the second search space set group.

**68.** The method of any one of claims 61 to 67, further comprising:
when a target SSB is changed from the first SSB to the second SSB, transmitting, by the network device, second indication information to the terminal device, wherein the second indication information is used for indicating at least one of:

an updated first time domain duration, an updated second time domain duration, an updated first offset, or an updated second offset,

wherein the updated first offset is an offset of a start position of the updated first time domain duration relative to a position of the updated second time domain duration; and

the updated second offset is an offset of an end position of the updated first time domain duration relative to the position of the updated second time domain duration.

**69.** The method of any one of claims 36 to 68, wherein the target time domain duration comprises X consecutive slots, where X is a positive integer.

**70.** A terminal device, comprising:
a processing unit, configured to determine a first time domain duration and/or a second time domain duration, wherein the first time domain duration corresponds to a maximum time domain duration of a first search space set group on a target time domain duration, and the second time domain duration corresponds to a maximum time domain duration of a second search space set group on the target time domain duration.

71. A network device, comprising:

a processing unit, configured to determine a first time domain duration and/or a second time domain duration, wherein the first time domain duration corresponds to a maximum time domain duration of a first search space set group on a target time domain duration, and the second time domain duration corresponds to a maximum time domain duration of a second search space set group on the target time domain duration.

72. A terminal device, comprising a processor and a memory for storing a computer program, wherein the processor is configured to invoke and run the computer program stored in the memory to perform the method of any one of claims 1 to 36.

73. A network device, comprising a processor and a memory for storing a computer program, wherein the processor is configured to invoke and run the computer program stored in the memory to perform the method of any one of claims 36 to 69.

74. A chip, comprising a processor, configured to invoke and run a computer program from a memory, to cause a device on which the chip is installed to perform the method of any one of claims 1 to 35.

75. A chip, comprising a processor, configured to invoke and run a computer program from a memory, to cause a device on which the chip is installed to perform the method of any one of claims 36 to 69.

76. A computer-readable storage medium for storing a computer program, wherein the computer program causes a computer to perform the method of any one of claims 1 to 35.

77. A computer-readable storage medium for storing a computer program, wherein the computer program causes a computer to perform the method of any one of claims 36 to 69.

78. A computer program product comprising computer program instructions, wherein the computer program instructions cause a computer to perform the method of any one of claims 1 to 35.

79. A computer program product comprising computer program instructions, wherein the computer program instructions cause a computer to perform the method of any one of claims 36 to 69.

80. A computer program, which causes a computer to perform the method of any one of claims 1 to 35.

81. A computer program, which causes a computer to perform the method of any one of claims 36 to 69.

100

FIG. 1A

FIG. 1B

1202

1203

1201

**FIG. 1C**

200

A terminal device determines a first time domain duration and/or a second time domain duration, the first time domain duration corresponds to a maximum time domain duration of a first search space set group on a target time domain duration, and the second time domain duration corresponds to a maximum time domain duration of a second search space set group on the target time domain duration

S210

**FIG. 2**

**FIG. 3**

FIG. 4

FIG. 5

EP 4 429 354 A1

One subframe

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

$X=8$

Y2 Before being updated

Y2 After being updated

**FIG. 6**

EP 4 429 354 A1

EP 4 429 354 A1

One subframe

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

X=8

Before being updated

| n0 | n0 +1 |

| SS 1 | | SS 2 | | | SS 1 | | SS 2 | | | SS 1 | | SS 2 | | | SS 1 | | SS 2 | |

After being updated

| n0 | n0 +1 |

| SS 1 | | SS 2 | | | SS 1 | | SS 2 | | | SS 1 | | SS 2 | | | SS 1 | | SS 2 | |

**FIG. 7**

**FIG. 8**

EP 4 429 354 A1

**FIG. 9**

300

The network device determines a first time domain duration and/or a second time domain duration, the first time domain duration corresponds to a maximum time domain duration of a first search space set group on a target time domain duration, and the second time domain duration corresponds to a maximum time domain duration of a second search space set group on the target time domain duration — S310

**FIG. 10**

Terminal device 400

Determining unit 410

**FIG. 11**

Network Device 500

Determining Unit 510

**FIG. 12**

**FIG. 13**

**FIG. 14**

**FIG. 15**

## INTERNATIONAL SEARCH REPORT

International application No.

**PCT/CN2021/129096**

### A. CLASSIFICATION OF SUBJECT MATTER

H04W 72/04(2009.01)i; H04W 52/02(2009.01)n; H04L 5/00(2006.01)n

According to International Patent Classification (IPC) or to both national classification and IPC

### B. FIELDS SEARCHED

Minimum documentation searched (classification system followed by classification symbols)

H04W; H04B; H04L

Documentation searched other than minimum documentation to the extent that such documents are included in the fields searched

Electronic data base consulted during the international search (name of data base and, where practicable, search terms used)

CNTXT; CNKI; CNABS; ENTXT; VEN; 3GPP: 搜索空间集, 第一, 第二, 时间, 时长, 时域, 重叠, search space set, first, second, time, duration, time-domain, overlap

### C. DOCUMENTS CONSIDERED TO BE RELEVANT

| Category* | Citation of document, with indication, where appropriate, of the relevant passages | Relevant to claim No. |
|---|---|---|
| X | CN 112788718 A (MEDIATEK INC.) 11 May 2021 (2021-05-11)<br>description, paragraphs 0026-0054, and figures 1-4 | 1-8, 15-21, 25, 35-43, 50-55, 60, 69-81 |
| A | CN 111587555 A (NOKIA TECHNOLOGIES OY) 25 August 2020 (2020-08-25)<br>entire document | 1-81 |
| A | CN 110876179 A (HUAWEI TECHNOLOGIES CO., LTD.) 10 March 2020 (2020-03-10)<br>entire document | 1-81 |
| A | WO 2020220976 A1 (HUAWEI TECHNOLOGIES CO., LTD.) 05 November 2020<br>(2020-11-05)<br>entire document | 1-81 |
| A | WO 2020173448 A1 (HUAWEI TECHNOLOGIES CO., LTD.) 03 September 2020<br>(2020-09-03)<br>entire document | 1-81 |
| A | US 2021029726 A1 (SAMSUNG ELECTRONICS CO., LTD.) 28 January 2021 (2021-01-28)<br>entire document | 1-81 |
| A | WO 2020222612 A1 (LG ELECTRONICS INC.) 05 November 2020 (2020-11-05)<br>entire document | 1-81 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 June 2022** | **28 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/129096** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2021031006 A1 (NOKIA SHANGHAI BELL CO., LTD. et al.) 25 February 2021 (2021-02-25)<br>    entire document | 1-81 |
| A | US 2020100311 A1 (COMCAST CABLE COMMUNICATIONS, LLC) 26 March 2020 (2020-03-26)<br>    entire document | 1-81 |

Form PCT/ISA/210 (second sheet) (January 2015)

INTERNATIONAL SEARCH REPORT
Information on patent family members

International application No.

**PCT/CN2021/129096**

| Patent document cited in search report | | | Publication date (day/month/year) | Patent family member(s) | | | Publication date (day/month/year) |
|---|---|---|---|---|---|---|---|
| CN | 112788718 | A | 11 May 2021 | None | | | |
| CN | 111587555 | A | 25 August 2020 | JP | 2021510969 | A | 30 April 2021 |
| | | | | WO | 2019138063 | A1 | 18 July 2019 |
| | | | | EP | 3738255 | A1 | 18 November 2020 |
| | | | | US | 2019215098 | A1 | 11 July 2019 |
| | | | | KR | 20200104403 | A | 03 September 2020 |
| CN | 110876179 | A | 10 March 2020 | WO | 2020043180 | A1 | 05 March 2020 |
| | | | | JP | 2021534681 | A | 09 December 2021 |
| | | | | EP | 3809761 | A1 | 21 April 2021 |
| | | | | KR | 20210025110 | A | 08 March 2021 |
| | | | | CN | 112586042 | A | 30 March 2021 |
| WO | 2020220976 | A1 | 05 November 2020 | EP | 3952158 | A1 | 09 February 2022 |
| | | | | US | 2022046452 | A1 | 10 February 2022 |
| WO | 2020173448 | A1 | 03 September 2020 | US | 2021385008 | A1 | 09 December 2021 |
| | | | | EP | 3917056 | A1 | 01 December 2021 |
| US | 2021029726 | A1 | 28 January 2021 | KR | 20220041041 | A | 31 March 2022 |
| | | | | WO | 2021015596 | A1 | 28 January 2021 |
| WO | 2020222612 | A1 | 05 November 2020 | EP | 3962224 | A1 | 02 March 2022 |
| | | | | KR | 20210153731 | A | 17 December 2021 |
| | | | | CN | 113767694 | A | 07 December 2021 |
| WO | 2021031006 | A1 | 25 February 2021 | None | | | |
| US | 2020100311 | A1 | 26 March 2020 | CA | 3056500 | A1 | 24 March 2020 |
| | | | | EP | 3627721 | A1 | 25 March 2020 |

Form PCT/ISA/210 (patent family annex) (January 2015)